# EUROPÄISCHE PATENTSCHRIFT

(11) **EP 1 689 522 B1**
(45) Veröffentlichungstag und Bekanntmachung des Hinweises auf die Patenterteilung: **08.08.2012**
(21) Anmeldenummer: 04764975.1
(22) Anmeldetag: 09.09.2004
(51) Int. Cl.: B01J 20/28, A41D 31/00, A62B 17/00, B01J 20/20

(54) **PLASMABEHANDELTE TEXTILOBERFLÄCHEN FÜR ABSORPTIVE FILTERMATERIALIEN**
PLASMA-TREATED TEXTILE SURFACES FOR ADSORPTION FILTER MATERIALS
SURFACES TEXTILES TRAITEES AU PLASMA POUR MATERIAUX FILTRANTS ADSORBANTS

(30) Priorität: 02.12.2003 DE 10356776
(43) Veröffentlichungstag der Anmeldung: 16.08.2006
(73) Patentinhaber: Blücher GmbH, 40699 Erkrath (DE)
(72) Erfinder: BÖHRINGER, Bertram, 42115 Wuppertal (DE); STOLL, Thomas, 72555 Metzingen (DE); HEINRICH, Peter, 47447 Moers (DE); MOSKOPP, Michael, 41366 Schwalmtal (DE)
(74) Vertreter: Gesthuysen, von Rohr & Eggert
(86) Internationale Anmeldenummer: PCT/EP2004/010036
(87) Internationale Veröffentlichungsnummer: WO 2005/053838

(56) Entgegenhaltungen:
- WO-A-03/045461
- DE-A- 10 037 048
- DE-A- 10 261 996
- DE-A- 19 640 607
- US-A- 4 510 193

## Beschreibung

Die vorliegende Erfindung betrifft plasmabehandelte Textiloberflächen zur Verwendung in adsorptiven Filtermaterialien.

Insbesondere betrifft die vorliegende Erfindung ein Adsorptionsfiltermaterial mit Schutzfunktion gegenüber chemischen Giften, insbesondere chemischen Kampfstoffen und chemischen Schadstoffen, nach dem Oberbegriff des Anspruchs 1, insbesondere für die Herstellung von Schutzmaterialien, wie Schutzanzügen, Schutzhandschuhen, Schutzschuhen, Schutzabdeckungen (z. B. für Krankentransporte) und dergleichen, insbesondere für den ABC-Einsatz, sowie die mit diesem Adsorptionsfiltermaterial hergestellten, zuvor genannten Schutzmaterialien selbst.

Es gibt eine Reihe von Stoffen, die von der Haut aufgenommen werden und zu schweren körperlichen Schäden führen. Als Beispiele seien das blasenziehende Lost (Gelbkreuz) und das Nervengift Sarin erwähnt. Menschen, die mit solchen Giften in Kontakt kommen können, müssen einen geeigneten Schutzanzug tragen bzw. durch geeignete Schutzmaterialien gegen diese Gifte geschützt werden.

Grundsätzlich gibt es drei Typen von Schutzanzügen: Die luft- und wasserdampfundurchlässigen Schutzanzüge, die mit einer für chemische Gifte undurchlässigen Gummischicht ausgestattet sind und sehr schnell zu einem Hitzestau führen, die luft- und wasserdampfdurchlässigen Schutzanzüge, die den höchsten Tragkomfort bieten, und schließlich Schutzanzüge, die mit einer Membran ausgestattet sind, welche zwar Wasserdampf, nicht aber die erwähnten Gifte hindurchläßt. ABC-Schutzkleidung wird also traditionell entweder aus vollständig impermeablen Systemen (z. B. Anzügen aus Butylkautschuk) oder permeablen, adsorptiven Filtersystemen auf Basis von Aktivkohle (Pulverkohle, Aktivkohlefaserstoffe oder Kugelkohle) hergestellt.

Schutzanzüge gegen chemische Kampfstoffe, die für einen längeren Einsatz unter den verschiedensten Bedingungen gedacht sind, dürfen beim Träger zu keinem Hitzestau führen. Daher verwendet man hauptsächlich luftdurchlässige Materialien. Die luftdurchlässigen, permeablen Schutzanzüge besitzen im allgemeinen eine Adsorptionsschicht mit Aktivkohle, welche die chemischen Gifte sehr dauerhaft bindet, so daß auch von stark kontaminierten Anzügen für den Träger keinerlei Gefahr ausgeht. Der große Vorteil dieses Systems ist, daß die Aktivkohle auch an der Innenseite zugänglich ist, so daß an Beschädigungen oder sonstigen undichten Stellen eingedrungene Gifte sehr schnell adsorbiert werden. Allerdings kann unter extremen Bedingungen, beispielsweise wenn ein Tropfen eines eingedickten Giftes aus größerer Höhe auf eine etwas offene Stelle des Außenmaterials auftrifft und bis zur Aktivkohle durchschlägt, die Kohleschicht örtlich kurzzeitig überfordert sein.

Die auf die Anmelderin selbst zurückgehende, nachveröffentlichte Druckschrift DE 102 61 996 A1 betrifft ein Adsorptionsmaterial, welches eine zumindest im wesentlichen luftundurchlässige, aber wasserdampfdurchlässige Sperrschicht und eine Adsorptionsschicht aufweist, wobei die Sperrschicht auf einem Trägermaterial aufgebracht ist und gleichzeitig als Haftschicht für die auf der dem Trägermaterial abgewandten Seite der Sperrschicht angeordnete Adsorptionsschicht dient.

Weiterhin betrifft die DE 196 40 607 A1 aus thermoplastischen Polymeren oder thermoplastischen Massen nach dem Schmelz-Blas-Verfahren hergestellte, gasdurchlässige und dimensionsstabile Vliese, die direkt nach der Erzeugung zunächst keine ausreichende Eigen- und Dimensionsstabilität besitzen und erst dann als dimensionsstabile, selbsttragende Vliese isoliert werden können, wenn durch eine Nachbehandlung oder eine Nachreaktionszeit eine ausreichende Dimensionsstabilität gegeben ist. Das dort beschriebene Material soll in Wegwerfwindeln, als Dämm-Material, als Verpakkungsmaterial, als Batterieseparatoren etc. eingesetzt werden.

Die DE 100 37 048 A1 betrifft ein Verfahren zur Herstellung hydrophiler Gegenstände aus einem textilen Flächengebilde mit cellulosischen Fasern, bei dem die Fasern, die daraus hergestellten Garne bzw. das textile Flächengebilde in Naßprozessen und in mechanischen Verarbeitungsprozessen veredelt und hydrophiliert werden, wobei das Hydrophilieren eine Plasmabehandlung mit einer sauerstoffhaltigen Atmosphäre umfaßt.

Des weiteren betrifft die WO 03/045461 A1 ein textiles Erzeugnis mit Oberflächenmodifikation auf Basis eines Polyvinylidenfluorid (PVDF)-Substrats, auf welchem eine proteinfreie Drug-Release-Matrix angeordnet ist. Das textile Erzeugnis soll im Rahmen der Herstellung von Implantaten eingesetzt werden und hochgradig biokompatibel sein.

Schließlich betrifft die gleichermaßen auf die Anmelderin selbst zurückgehende US 4 510 193 A ein Flächenfiltermaterial, welches aus einem luftdurchlässigen Textilmaterial, einem Klebstoff, welcher etwa 20 bis 80 % der Oberfläche des Textilmaterials bedeckt, sowie hierauf beaufschlagten Aktivkohlepartikeln besteht.

Es ist daher die Aufgabe der vorliegenden Erfindung, ein Adsorptionsfilter- bzw. Schutzmaterial bereitzustellen, welches die zuvor geschilderten Nachteile des Standes der Technik zumindest weitgehend vermeidet und sich insbesondere für die Herstellung von ABC-Schutzmaterialien, wie Schutzanzügen, Schutzhandschuhen, Schutzschuhen, Schutzabdeckungen und dergleichen, eignet.

Die zuvor geschilderte Aufgabe wird im Rahmen der vorliegenden Erfindung durch ein Adsorptionsfiltermaterial nach Anspruch 1 gelöst. Weitere, vorteilhafte Ausgestaltungen des erfindungsgemäßen Adsorptionsfiltermaterials sind Gegenstand der Unteransprüche (Ansprüche 2 bis 29).

Weiterer Gegenstand der vorliegenden Erfindung sind die Verwendung des erfindungsgemäßen Adsorptionsfiltermaterials zur Herstellung von Schutzmaterialien aller Art (Anspruch 32), insbesondere zur Herstellung von Schutzanzügen, Schutzhandschuhen, Schutzschuhen und Schutzabdeckungen, vorzugsweise für den ABC-Einsatz, sowie die auf diese Weise hergestellten Schutzmaterialien der vorgenannten Art selbst (Ansprüche 30 und 31).

Gegenstand der vorliegenden Erfindung gemäß einem ersten Aspekt der vorliegenden Erfindung ist somit ein Adsorptionsfiltermaterial mit Schutz gegenüber chemischen Giften, insbesondere chemischen Kampfstoffen und chemischen Schadstoffen, mit einem mehrschichtigen Schichtaufbau,
wobei der Schichtaufbau
- mindestens eine erste, insbesondere flächige Trägerschicht mit zwei gegenüberliegenden Seiten und
- eine der Trägerschicht zugeordnete Adsorptionsschicht auf Basis eines chemische Gifte adsorbierenden Materials, wobei die Adsorptionsschicht ein chemische Gifte adsorbierendes Adsorbens auf Basis von Aktivkohle in Form von Aktivkohleteilchen und/oder Aktivkohlefasern umfaßt, und
- mindestens eine weitere, insbesondere flächige Trägerschicht mit zwei gegenüberliegenden Seiten, wobei die weitere, zweite Trägerschicht auf der der ersten Trägerschicht gegenüberliegenden Seite der Adsorptionsschicht angeordnet ist,
aufweist,
wobei die Oberfläche mindestens einer der beiden Seiten der ersten Trägerschicht durch Plasmabehandlung modifiziert ist.

Denn die Anmelderin hat überraschenderweise herausgefunden, daß die Eigenschaften, insbesondere die Schutz- bzw. Adsorptionsleistung, von Adsorptionsfiltermaterialien entscheidend beeinflußt bzw. verbessert werden können, indem die bei derartigen Adsorptionsfiltermaterialien üblicherweise vorhandene Trägerschicht an ihren Oberflächen mittels Plasmabehandlung modifiziert wird. Durch die Plasmabehandlung lassen sich Oberflächeneigenschaf ten, wie Oberflächenbeschaffenheit (z. B. Rauhigkeit) und Oberflächenreaktivitäten (z. B. Hydrophilie oder Hydrophobie bzw. Oleophilie oder Oleophobie), gezielt einstellen.

Die grundlegende Idee der vorliegenden Erfindung besteht also darin, Adsorptionsfiltermaterialien mit vorzugsweise mehrschichtigem Schichtaufbau dadurch mit einer erhöhten bzw. verbesserten Schutzfunktion gegenüber chemischen Giften, insbesondere chemischen Kampfstoffen und chemischen Schadstoffen, auszurüsten, daß die Oberflächeneigenschaften der in derartigen Adsorptionsfiltermaterialien üblicherweise vorhandenen Trägermaterialien bzw. Trägerschichten durch Plasmabehandlung modifiziert und auf diese Wiese den jeweiligen Anwendungserfordernissen entsprechend angepaßt bzw. optimiert sind.

Weitere Vorteile, Eigenschaften, Aspekte und Merkmale der vorliegenden Erfindung ergeben sich aus der folgenden Beschreibung von in den Zeichnungen dargestellten, bevorzugten Ausführungsbeispielen. Es zeigt:
- Fig. 1A: Eine schematische Schnittdarstellung durch den Schichtaufbau eines Adsorptionsfiltermaterials gemäß einem bevorzugten Ausführungsbeispiel der vorliegenden Erfindung, wobei die Adsorptionsschicht aus diskreten Adsorbenspartikeln gebildet wird;
- Fig. 1B: eine schematische Schnittdarstellung durch den Schichtaufbau eines Adsorptionsfiltermaterials gemäß einem weiteren bevorzugten Ausführungsbeispiel der Erfindung entsprechend einer alternativen Ausgestaltung, wobei die Adsorptionsschicht als kontinuierliche Schicht eines Aktivkohlefaserflächengebildes ausgebildet ist;
- Fig. 2: eine schematische Schnittdarstellung durch den Schichtaufbau eines Adsorptionsfiltermaterials gemäß einem wiederum weiteren bevorzugten Ausführungsbeispiel der Erfindung entsprechend einer weiteren Ausführungsform,

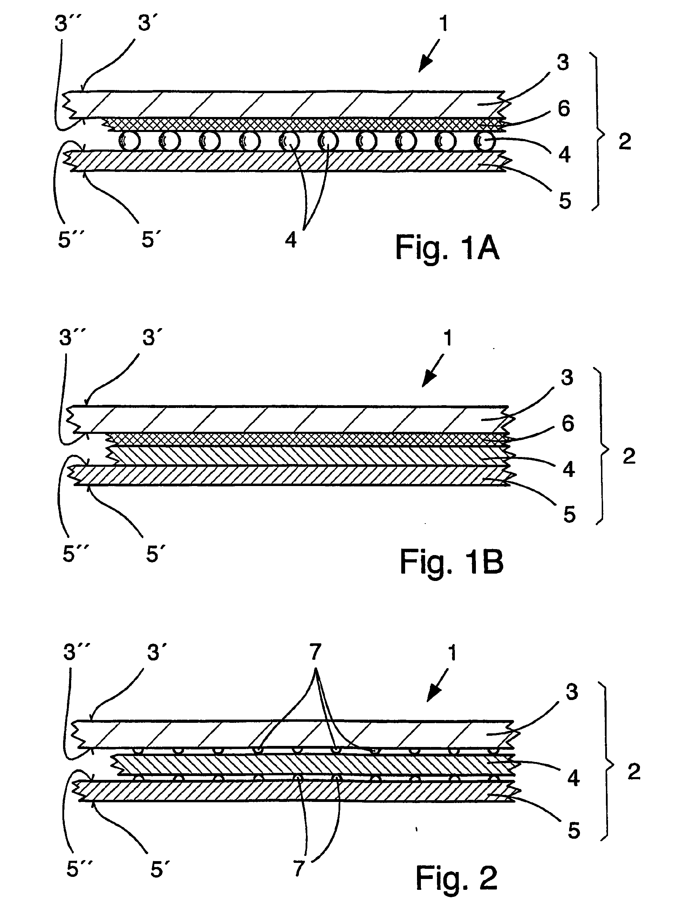

Fig. 1A und 1B zeigen jeweils eine schematische Schnittdarstellung durch den Schichtaufbau 2 eines erfindungsgemäßen Adsorptionsfiltermaterials 1. Das erfindungsgemäße Adsorptionsfiltermaterial 1, welches mit einer Schutzfunktion gegenüber chemischen Giften, insbesondere chemischen Kampfstoffen und chemischen Schadstoffen, ausgestattet ist, weist einen mehrschichtigen Schichtaufbau 2 auf, wobei der Schichtaufbau 2 mindestens eine insbesondere flächige Trägerschicht 3 mit zwei gegenüberliegenden Seiten 3', 3 "sowie eine der Trägerschicht 3 zugeordnete Adsorptionsschicht 4 auf Basis eines chemische Gifte adsorbierenden Materials aufweist. Die Oberfläche mindestens einer der beiden Seiten 3', 3"der Trägerschicht 3 ist durch Plasmabehandlung modifiziert; hierdurch lassen sich die Oberflächeneigenschaften der Trägerschicht bzw. des Trägermaterials 3 gezielt modifizieren bzw. einstellen.

Wie aus Fig. 1A und 1B ersichtlich, weist das erfindungsgemäße Adsorptionsfiltermaterial 1 außerdem mindestens eine weitere, insbesondere flächige Trägerschicht 5 mit zwei gegenüberliegenden Seiten 5', 5"auf. Erfindungsgemäß ist die zweite Trägerschicht 5 auf der der ersten Trägerschicht 3 gegenüberliegenden Seite der Adsorptionsschicht 4 angeordnet. Die Oberfläche mindestens einer der beiden Seiten 5', 5" der zweiten Trägerschicht 5 kann gleichermaßen durch Plasmabehandlung modifiziert sein.

Der Begriff "Plasmabehandlung", wie er im Rahmen der vorliegenden Erfindung verwendet wird, umfasst jede im Rahmen der vorliegenden Erfindung geeignete, an sich bekannte Methode zur Plasmabehandlung von Trägerschichten bzw. Trägermaterialien, insbesondere textilen Trägerschichten bzw. Trägermaterialien.

Der Begriff "Plasma" wird oftmals auch als der vierte Aggregatzustand bezeichnet. Wenn einem Feststoff Energie zugeführt wird, kann der Feststoff in den flüssigen Aggregatzustand übergehen, und wenn dann noch weitere Energie zugeführt wird, kann die Flüssigkeit zu einem Gas werden. Wenn schließlich noch zusätzliche Energie der richtigen Art eingetragen wird, kann das Gas dissoziieren und zu einem Plasma werden. Plasmen existieren in einer Vielzahl von Erscheinungen. Plasmen von sehr hoher Energie und Temperatur sind industriell, insbesondere bei der Behandlung von Oberflächen von Trägerschichten, nicht anwendbar. Zur erfindungsgemäß vorgesehenen Plasmabehandlung werden daher insbesondere Niederdruck- bzw. Vakuumverfahren angewandt, so daß die Temperatur des Plasmas nur geringfügig oberhalb der Umgebungstemperatur ist (sogenanntes Niedertemperatur- oder Kaltgasplasma). Dies geschieht insbesondere durch Anwenden der geeigneten Energieart und Auswahl einer geeigneten Gasatmosphäre, was im Rahmen des fachmännischen Könnens liegt.

Ohne sich auf eine bestimmte Theorie festlegen zu wollen, finden bei der Plasmabehandlung verschiedene miteinander konkurrierende molekulare Prozesse bzw. Reaktionen statt, welche in der Lage sind, die Oberfläche(n) der Trägerschicht bzw. des Trägermaterials 3 und/oder der Trägerschicht bzw. des Trägermaterials 5 zu modifizieren, nämlich erstens die Ablation (= Entfernung von Oberflächenmaterial durch Verdampfung, synonym gelegentlich auch als Ätzen oder Plasmaätzen bezeichnet), zweitens das Vernetzen (= chemische Verbindung von zwei oder mehreren Polymerketten) und drittens die Aktivierung (= Substitution von Atomen in der Oberfläche mit chemischen Gruppen aus dem Plasma). Diese drei vorgenannten Reaktionen werden durch die Gaschemie und die Prozeßvariablen (Druck, Temperatur, Energieeintrag, Behandlungsdauer etc.) in einem bestimmten Plasmabehandlungssystem beeinflußt und gesteuert.

Das erfindungsgemäß bevorzugt angewandte Plasma ist ein Niedertemperaturplasma, insbesondere ein Kaltgasplasma, insbesondere mit Temperaturen unterhalb von 60 °C, vorzugsweise unterhalb von 50 °C, damit die zu modifizierende Oberfläche nicht beschädigt bzw. zerstört wird. Um derart niedrige Temperaturen zu realisieren, verfährt man üblicherweise bei vermindertem Druck bzw. im Vakuum, insbesondere bei Drücken von 0,0001 bis 100 Torr, vorzugsweise 0,001 bis 10 Torr. Als plasmabildende Gase können dabei anorganische und/oder organische Gase oder Gasmischungen eingesetzt werden, z. B. auf Basis von Stickstoffoxiden, Kohlenstoffoxiden, Edelgasen, Stickstoff, Sauerstoff, Ozon und/oder chlorhaltigen Gasen. Dies ist dem Fachmann an sich bekannt.

Zur Plasmabehandlung der zu modifizierende(n) Oberfläche(n) wird bzw. werden diese dem Plasma eine ausreichende Zeit ausgesetzt, um die gewünschten Oberflächeneigenschaften zu erhalten. Beispielsweise kann dabei derart vorgegangen werden, daß die Trägerschicht(en) 3 bzw. 5 in eine entsprechende Plasmavakuumkammer eingebracht wird bzw. werden und dann das Plasma auf die entsprechende(n), zu modifizierende(n) Oberfläche(n) für eine ausreichende Zeitdauer einwirken gelassen wird. Durch die Auswahl geeigneter Prozeßparameter (Druck, Temperatur, Energieeintrag, Behandlungsdauer, Auswahl an Gasen etc.), welche dem Fachmann an sich geläufig sind, kann die Oberfläche dann in der gewünschten Art und Weise modifiziert werden.

Zur Erzeugung des Plasmas werden die plasmabildenden Gase im allgemeinen einer Hochfrequenzenergie (z. B. im Bereich von 40 kHz bis 3 GHz) ausgesetzt, um die plasmabildenden Gase zu einem Plasma zu dissoziieren, welches anschließend auf die zu modifizierende Oberfläche einwirkt. Dabei sind Druckbedingungen, Behandlungsdauer, Temperatur, Gasauswahl und Energiefrequenzen miteinander in Beziehung stehende Variablen, welche der Fachmann im Rahmen seines fachmännischen Könnens gezielt im Hinblick auf die durchzuführende Modifizierung einstellt bzw. auswählt.

Im allgemeinen wird die Plasmabehandlung unmittelbar an der oder den Oberfläche(n) 3', 3", 5', 5" der Trägerschicht(en) 3 bzw. 5 durchgeführt. Gleichermaßen besteht aber auch die Möglichkeit, die Plasmabehandlung nur mittelbar an der oder den Oberfläche(n) 3', 3", 5', 5" der Trägerschicht(en) 3 bzw. 5 durchzuführen, indem zunächst ein polymerer oder polymerisierbarer Film auf die zu behandelnde(n) Oberfläche(n) aufgebracht wird, wobei anschließend der polymere bzw. polymerisierbare Film durch Plasmabehandlung verletzt bzw. ausgehärtet wird; bei erfindungsgemäß geeigneten polymeren oder polymerisierbaren Filmen kann es sich beispielsweise um Filme aus Silikonen, insbesondere Silikonölen, oder Organopolysiloxanen handeln.

Durch die Plasmabehandlung lassen sich die Oberflächeneigenschaften der Trägerschichten 3 bzw. 5 gezielt einstellen, so z. B. die Oberflächenbeschaffenheit (z. B. Rauhigkeit) oder Oberflächenreaktivitäten. Beispielsweise kann durch die Erhöhung der Rauhigkeit das Haftungsvermögen in bezug auf Klebstoffe zur Befestigung der Adsorptionsschicht 4 an der Trägerschicht 3 bzw. 5 gezielt erhöht werden. Durch Vergrößerung oder Verringerung der Oberflächenreaktivität lassen sich beispielsweise hydrophile bzw. hydrophobe oder oleophile bzw. oleophobe Eigenschaften der Oberflächen gezielt einstellen, beispielsweise um ein Abweisungsvermögen in bezug auf chemische Gifte, z. B. organische Chemikalien, oder eine bessere oder schlechtere Wasserbenetzbarkeit zu erreichen. Beispielsweise kann eine vergrößerte Oberflächenreaktivität experimentell durch die Wasserbenetzbarkeit charakterisiert werden, welche die Fähigkeit einer Flüssigkeit, insbesondere Wasser, beschreibt, sich über eine Oberfläche auszubreiten und in diese einzudringen. Die Wasserbenetzbarkeit kann durch den Kontaktwinkel zwischen der Flüssigkeit, insbesondere Wasser, und der Oberfläche durch Verwendung von Bezugsflüssigkeiten mit bekannten Eigenschaften gemessen werden; der Zusammenhang zwischen Kontaktwinkel und Oberflächenenergie bzw. Oberflächenreaktivität ist direkt, d. h. der Kontaktwinkel nimmt mit der Oberflächenenergie bzw. Oberflächenreaktivität ab.

Wenn das erfindungsgemäße Adsorptionsfiltermaterial 1 z. B. in ABC-Schutzmaterialien, z. B. in ABC-Schutzanzügen, eingesetzt wird, kann durch die Plasmabehandlung die Oberflächenreaktivität der Oberfläche mindestens einer der beiden Seiten 3', 3" der Trägerschicht 3 einerseits und der Oberfläche mindestens einer der beiden Seiten 5', 5" der Trägerschicht 5 andererseits mit entgegengesetzten Eigenschaften modifiziert werden. Dabei kann durch die Plasmabehandlung die Oberflächenreaktivität der Oberfläche mindestens einer der beiden Seiten 3', 3" der Trägerschicht 3 erhöht sein und die Oberflächenreaktivität der Oberfläche mindestens einer der beiden Seiten 5', 5" der Trägerschicht 5 verringert sein oder umgekehrt. Beispielsweise lassen sich durch die Plasmabehandlung die Oberflächen der Trägerschichten 3 bzw. 5 hydrophil oder hydrophob oder aber oleophil oder oleophob modifizieren bzw. einstellen. Gleichermaßen können die plasmabehandelten Oberflächen der Trägerschicht 3 bzw. 5 sauer oder basisch modifiziert bzw. eingestellt sein.

Wenn das erfindungsgemäße Adsorptionsfiltermaterial 1 beispielsweise in ABC-Schutzmaterialien, insbesondere ABC-Schutzanzügen, eingesetzt wird, kann beispielsweise die im Gebrauchszustand des Adsorptionsfiltermaterials 1 nach außen gerichtete Seite 3' der Trägerschicht 3 oleophob eingestellt sein, um organische Chemikalien abzuweisen, während die Oberfläche mindestens einer der beiden Seiten 5', 5" der im Gebrauchsstand der Körperseite zugewandten Trägerschicht 5 hydrophil eingestellt sein kann, um Körperschweiß besser aufnehmen und besser vom Körper weg nach außen transportieren zu können.

Bei den Trägerschichten 3 und 5 kann es sich um vorzugsweise luftdurchlässige Textilmaterialien handeln. Beispiele hierfür sind textile Flächengebilde aller Art, so z. B. Gewebe, Gewirke, Gestricke, Gelege, Textilverbundstoffe, Vliese und Non-Wovens.

Die Trägerschichten 3 und 5 bestehen im allgemeinen aus vorzugsweise luftdurchlässigen Textilmaterialien, welche polymere bzw. synthetische, vorzugsweise thermoplastische Fasern umfassen oder hieraus bestehen. Dies ist erforderlich, um die Oberflächen unmittelbar durch Plasmabehandlung modifizieren zu können. Beispiele für polymere bzw. synthetische Textilfasern sind Polyacryl (PAN), Polyamide (PA), wie Polyamid 6 und Polyamid 66, Polyester (PES), Polyolefine, insbesondere Polyethylen (PE) und Polypropylen (PP), Polyvinylalkohol (PVAI), Polyvinylchlorid (CLF), Polyvinylidenchlorid (CLF), Acetat (CA), Triacetat (CTA), Aramid (AR), Elastan (EL), Elastodien (ED), Fluoro (PTFE), Gummi (LA), Kohlenstoff (CF), Viskose (CV) sowie Mischungen der vorgenannten Faserarten. Die in Klammern verwendeten Abkürzungen sind Kurzzeichen nach DIN 60001-4: 1991-08. Die Trägerschichten 3 und 5 können aus den vorgenannten synthetischen bzw. polymeren Fasermaterialien bestehen oder diese zu einem gewissen Anteil umfassen (z. B. im Fall von Mischmaterialien aus natürlichen und synthetischen bzw. polymeren Textilfasern). Im Fall von textilen Materialien aus rein natürlichen Textilfasern besteht die Möglichkeit der Plasmamodifizierung durch vorheriges Aufbringen eines polymeren bzw. polymerisierbaren Films, wie zuvor beschrieben.

Gemäß einer besonders bevorzugten Ausführungsform des erfindungsgemäßen Adsorptionsfiltermaterials 1 ist mindestens einer der beiden Trägerschichten 3, 5 ein PA/PES-Textilflächengebilde, insbesondere ein PA/PES-Vlies, oder ein PES-Fasern enthaltendes Flächengebilde, insbesondere ein PES/Cellulose-Textilflächengebilde.

Gemäß einer bevorzugten Ausführungsform ist die im Gebrauchszustand des Adsorptionsfiltermaterials 1 einer Schadstoffquelle zugewandte Trägerschicht 3 oder 5 vorzugsweise auf ihrer der Schadstoffquelle zugewandten Seite 3' oder 5' durch Plasmabehandlung oleophob eingestellt bzw. modifiziert, um Tröpfchen von organischen chemischen Substanzen besser abweisen zu können, und die im Gebrauchszustand des Adsorptionsfiltermaterials 1 einer Schadstoffquelle abgewandte Trägerschicht 5 oder 3 vorzugsweise auf ihrer der Schadstoffquelle abgewandten Seite 5' oder 3' durch Plasmabehandlung hydrophil eingestellt bzw. modifiziert, um Feuchtigkeit (z. B. Körperschweiß) besser abtransportieren zu können.

Durch Plasmabehandlung können die Oberflächeneigenschaften der Trägerschichten 3, 5 also gezielt modifiziert bzw. geändert werden. So können die Oberflächen, wie zuvor eingehend beschrieben, beispielsweise hydrophil oder hydrophob, oleophil oder oleophob, sauer oder basisch, rauh oder glatt etc. eingestellt werden. Insbesondere ist es möglich, beide Materialseiten des textilen Verbundes des erfindungsgemäßen Adsorptionsfiltermaterials 1 unterschiedlichen Plasmabehandlungen zu unterziehen und auf beiden Seiten unterschiedliche Oberflächeneigenschaften zu erreichen. Dabei kann beispielsweise eine Seite hydrophil ausgestattet werden, während die andere Seite hydrophob ausgestattet sein kann.

Was die Adsorptionsschicht 4 anbelangt, so ist diese im allgemeinen als separate Schicht ausgebildet. Dennoch besteht die Möglichkeit, die Adsorptionsschicht 4 in die Trägerschicht 3 und/oder 5 zu integrieren, so daß die Adsorptionsschicht 4 Bestandteil der Trägerschicht 3 und/oder 5 ist (z. B. im Fall eines PU-Schaumstoffes, der mit Aktivkohle beladen ist). Im allgemeinen wird jedoch eine separate Adsorptionsschicht 4 bevorzugt.

Wie zuvor geschildert, umfaßt die Adsorptionsschicht 4 ein chemische Gifte, insbesondere chemische Kampfstoffe und/oder chemische Schadstoffe, adsorbierendes Material. Hierbei handelt es sich um ein Adsorptionsfiltermaterial auf der Basis von Aktivkohle. Dabei kann die Adsorptionsschicht 4 an der Trägerschicht 3 und/oder 5 befestigt sein, insbesondere dauerhaft hieran befestigt sein (z. B. durch Verkleben, Verheften, Vernähen, Verschweißen oder dergleichen), besonders bevorzugt durch Verkleben (z. B. mit einem thermoplastischen Klebstoff, wie z. B. einem insbesondere feuchtigkeitsvernetzenden Polyurethan-Reaktivklebstoff), wobei der Klebstoff vorteilhafterweise nur diskontinuierlich, vorzugsweise nur punktförmig, auf der Trägerschicht 3 und/oder 5 aufgetragen ist.

Wie Fig. 1A zeigt, ist die Adsorptionsschicht 4 erfindungsgemäß diskontinuierlich ausgebildet. Dabei umfasst die Adsorptionsschicht 4 diskrete, chemische Gifte adsorbierende Adsorptionspartikel auf der Basis von Aktivkohle, vorzugsweise in Form von Aktivkohleteilchen und/oder Aktivkohlefasern. Vorteilhafterweise umfasst die Adsorptionsschicht 4 die diskreten Aktivkohleteilchen vorzugsweise in Kornform ("Kornkohle") oder in Kugelform ("Kugelkohle"), wobei der mittlere Durchmesser der Aktivkohleteilchen weniger als 1,0 mm, insbesondere weniger als 0,5 mm, vorzugsweise weniger als 0,4 mm, beträgt, jedoch mindestens 0,1 mm. Die Aktivkohleteilchen können in einer Menge von 5 bis 500 g/m², insbesondere 10 bis 400 g/m², vorzugsweise 20 bis 300 g/m², bevorzugt 25 bis 250 g/m², vorhanden sein. Vorteilhafterweise betragen die inneren Oberflächen (BET) der Aktivkohleteilchen mindestens 800 m²/g, insbesondere mindestens 900 m²/g, vorzugsweise mindestens 1.000 m²/g, und liegen bevorzugt im Bereich von 800 bis 1.500 m²/g. Um eine besonders gute Druckfestigkeit zu erreichen, ist es von Vorteil, wenn die Aktivkohleteilchen einen Berstdruck je einzelnes Aktivkohleteilchen, insbesondere Aktivkohlekörnchen bzw. -kügelchen, von mindestens 5 Newton, insbesondere mindestens 10 Newton, aufweisen, der bis zu 20 Newton oder mehr erreichen kann.

Gemäß einer alternativen Ausführungsform, wie sie in Fig. 1B dargestellt ist, kann die Adsorptionsschicht 4 aber auch Aktivkohlefasern, insbesondere in Form eines Aktivkohleflächengebildes, umfassen. Geeignete Aktivkohleflächengebilde besitzen ein Flächengewicht von 20 bis 200 g/m², insbesondere 30 bis 150 g/m², vorzugsweise 50 bis 120 g/ m². Bei dem Aktivkohleflächengebilde kann es sich insbesondere um ein Aktivkohlegewebe, -gewirke, -gelege oder -verbundstoff, insbesondere auf Basis von carbonisierter und aktivierter Cellulose und/oder auf Basis eines carbonisierten und aktivierten Acrylnitrils, handeln.

Zur Erhöhung der Adsorptionseffizienz bzw. Adsorptionsleistung besteht die Möglichkeit, das Adsorbens der Adsorptionsschicht 4, insbesondere die Aktivkohleteilchen und/oder die Aktivkohlefasern, außerdem mit mindestens einem Katalysator zu imprägnieren. Erfindungsgemäß geeignete Katalysatoren sind beispielsweise Enzyme und/oder Metallionen, vorzugsweise Kupfer-, Silber-, Cadmium-, Platin-, Palladium-, Zink- und/oder Quecksilberionen. Die Menge an Katalysator kann dabei in weiten Bereichen variieren; im allgemeinen beträgt sie 0,05 bis 12 Gew.-%, vorzugsweise 1 bis 10 Gew.-%, besonders bevorzugt 2 bis 8 Gew.-%, bezogen auf das Gewicht der Adsorptionsschicht 4.

Des weiteren besteht die Möglichkeit, das Adsorptionsfiltermaterial 1 nach der vorliegenden Erfindung außerdem mit mindestens einer den Durchtritt chemischer Gifte verzögernden oder gegenüber chemischer Gifte zumindest im wesentlichen undurchlässigen Membran 6 auszustatten. Vorteilhafterweise kann diese Membran 6 zumindest im wesentlichen wasser- und luftundurchlässig, aber wasserdampfdurchlässig ausgestattet sein.

Die Membran 6 kann zwischen der ersten Trägerschicht 3 und der Adsorptionsschicht 4 oder aber zwischen der zweiten Trägerschicht 5 und der Adsorptionsschicht 4 angeordnet sein. Vorteilhafterweise ist die Membran 6 derart angeordnet, daß sie im Gebrauchszustand des erfindungsgemäßen Adsorptionsfiltermaterials 1 stromaufwärts in bezug auf die Adsorptionsschicht 4 angeordnet wird, so daß die chemischen Gifte zunächst auf die Membran 6 treffen.

Was die Membran 6 anbelangt, so handelt es sich hierbei im allgemeinen um eine kontinuierliche, insbesondere geschlossene oder allenfalls mikroporöse Membran.

Bei der Membran 6 kann es sich beispielsweise um eine 1 bis 500 µm dicke, insbesondere 1 bis 250 µm dicke, vorzugsweise 1 bis 100 µm, bevorzugt 1 bis 50 µm dicke, besonders bevorzugt 2,5 bis 30 µm dicke, ganz besonders bevorzugt 5 bis 25 µm dicke Membran handeln, die einen Kunststoff bzw. ein Polymer umfaßt bzw. hieraus besteht. Der Kunststoff bzw. das Polymer kann aus der Gruppe von Polyurethanen, Polyetheramiden, Polyesteramiden, Polytetrafluorethylenen und Polymeren auf Cellulosebasis sowie Derivaten der vorgenannten Verbindungen ausgewählt sein kann. Besonders bevorzugt handelt es sich bei der Membran 6 um eine polyurethanbasierte Membran oder eine expandierte, gegebenenfalls mikroporöse Membran auf Basis von Polytetrafluorethylen.

Gemäß einer besonderen Ausführungsform kann die Membran 6 als ein mehrschichtiges Membranlaminat bzw. als ein mehrschichtiger Membranverbund ausgebildet sein, wobei das Membranlaminat bzw. der Membranverbund aus mindestens zwei, vorzugsweise mindestens drei miteinander verbundenen Schichten oder Lagen bestehen kann. Beispielsweise kann das Membranlaminat bzw. der Membranverbund eine Kernschicht auf Basis eines Polymers auf Cellulosegrundlage und zwei mit der Kernschicht verbundene äußere Schichten insbesondere auf Basis eines Polyurethans, eines Polyetheramids und/oder eines Polyesteramids umfassen, wobei die Kernschicht auf Basis des Polymers auf Cellulosegrundlage als 1 bis 100 µm, insbesondere 5 bis 50 µm, vorzugsweise 10 bis 20 µm dicke Membran ausgebildet sein kann und die zwei mit der Kernschicht verbundenen äußeren Schichten jeweils als 1 bis 100 µm, insbesondere 5 bis 50 µm, vorzugsweise 5 bis 10 µm dicke Membran ausgebildet sein können. Die besondere Ausgestaltung der Membran 6 als Membranlaminat bzw. als Membranverbund ermöglicht es, verschiedene Membranmaterialien mit jeweils unterschiedlichen Eigenschaften, insbesondere unterschiedlichen Wasserdampfdurchlässigkeiten und/oder Barrierewirkungen gegenüber chemischen Giften, miteinander zu kombinieren und so eine Optimierung der Eigenschaften der Membran 6 zu erreichen. Beispielsweise sind Cellulose und Cellulosederivate ausgezeichnete Sperrschichtmaterialien, insbesondere gegenüber chemischen Schad- bzw. Giftstoffen, wie z. B. Kampfstoffen (Lost etc.), und werden von diesen Giften nicht angegriffen bzw. aufgelöst; zum anderen verhindern polyurethanbasierte Materialien eine Migration bzw. Diffusion der in der Celluloseschicht gegebenenfalls vorhandenen Weichmacher und dämpfen außerdem das durch die Cellulose bedingte, bei Benutzung bzw. beim Tragen auftretende Knistern. Deswegen ist es gemäß dieser besonderen Ausführungsform bevorzugt, daß im Fall eines Membranlaminats oder Membranverbunds die Kernschicht auf Basis eines Polymers auf Cellulosegrundlage gebildet wird, während die beiden Außenschichten der Membran 6 durch Polyurethanschichten gebildet werden.

Durch die Anwesenheit der Membran 6, welche vorteilhafterweise im Gebrauchszustand des erfindungsgemäßen Adsorptionsfiltermaterials 1 stromaufwärts in bezug auf die Adsorptionsschicht 4 angeordnet ist, wird bewirkt, daß gegebenenfalls durch die Trägerschicht 3 bzw. 5 eingedrungene chemische Gifte, wie z. B. chemische Kampfstoffe oder chemische Schadstoffe, nicht weiter in das Material eindringen können, insbesondere die Adsorptionsschicht 4 nicht oder zumindest zu einem überwiegenden Teil gar nicht erst erreichen können, so daß die Adsorptionskapazität der Adsorptionsschicht 4 quasi unerschöpflich bleibt. Zum anderen wird durch die Anwesenheit der Membran 6 für den Fall, daß das Adsorptionsfiltermaterial 1 als ABC-Schutzanzug verwendet wird, ein zusätzlicher Schutz für den Träger des Adsorptionsfiltermaterials 1 bzw. des ABC-Schutzanzuges geschaffen, so daß ein Adsorptionsfiltermaterial 1 mit sozusagen doppelter Schutzfunktion gegenüber chemischen Giften resultiert (nämlich einerseits durch die Sperrwirkung der Membran 6 und andererseits durch die Adsorptionswirkung der Adsorptionsschicht 4). Durch die Ausstattung des erfindungsgemäßen Filtermaterials mit einer speziellen Membran 6, welche den Durchtritt chemischer Gifte verzögert bzw. gegenüber chemischen Giften zumindest im wesentlichen undurchlässig ist, wird gleichzeitig eine gute Dekontaminierbarkeit und Regenerierbarkeit des erfindungsgemäßen Adsorptionsfiltermaterials 1 erreicht wird. Denn durch die Trägerschichten 3 bzw. 5 gegebenenfalls eingedrungene, auf der Membran 6 befindliche Gifte können durch entsprechende Behandlungsverfahren ohne weiteres wieder von der Membran 6 entfernt werden (z. B. durch Herunterspülen, beispielsweise mit geeigneten Dekontaminationslösungen, welche dem Fachmann zu diesen Zwecken bestens bekannt sind).

Vorteilhafterweise ist die Membran 6 und somit das Adsorptionsfiltermaterial 1 derart ausgestaltet, daß die Membran 6 bzw. das Adsorptionsfiltermaterial 1 eine Barrierewirkung gegenüber chemischen Kampfstoffen, insbesondere Bis-[2-chlorethyl]sulfid (Senfgas, Lost, Gelbkreuz), gemessen nach CRDEC-SP-84010, Methode 2.2, von höchstens 4 µg /cm² pro 24 h, insbesondere höchstens 3,5 µg / cm² pro 24 h, vorzugsweise höchstens 3,0 µg / cm² pro 24 h, besonders bevorzugt höchstens 2,5 mg / cm² pro 24 h, bei einer Dicke der Membran 6 von 50 µm aufweist.

Zur Erhöhung des Tragekomforts, insbesondere der Atmungsaktivität, weist die Membran 6 bei 25 °C und bei einer Dicke von 50 µm eine hohe Wasserdampfdurchlässigkeit von mindestens 12,5 1/m² pro 24 h, insbesondere mindestens 17,5 1/m² pro 24 h, vorzugsweise mindestens 20 1/m² pro 24 h oder mehr, auf (gemessen nach der "Methode des umgekehrten Bechers" bzw. "inverted cup method" nach ASTM E 96 und bei 25 °C). Zu weiteren Einzelheiten zur Messung der Wasserdampfdurchlässigkeit [water vapour transmission, WVT] vgl. auch McCullough et al. "A comparison of standard methods for measuring water vapour permeability of fabrics" in Meas. Sci. Technology [Measurements Science and Technology] 14, 1402-1408, August 2003*.* Hierdurch wird ein besonders hoher Tragekomfort gewährleistet. Aufgrund der Vielzahl von Schichten 3, 4, 5 und 6 des Schichtaufbaus 2 ist die Wasserdampfdurchlässigkeit des Adsorptionsfiltermaterials 1 insgesamt - im Vergleich zu der Membran 6 allein - geringfügig geringer; die Wasserdampfdurchlässigkeit des Adsorptionsfiltermaterials 1 insgesamt ist dennoch sehr hoch und beträgt mindestens 10 1/m² pro 24 h, insbesondere mindestens 15 1/m² pro 24 h, vorzugsweise mindestens 17,5 1/m² pro 24 h, bei einer Dicke der Membran 6 von 50 µm (bei 25 °C).

Die Membran 6 sollte aus Gründen der Atmungsaktivität einen geringen Wasserdampfdurchgangswiderstand Rₑₜ unter stationären Bedingungen - gemessen nach DIN EN 31 092:1993 vom Februar 1994 ("Textilien - physiologische Wirkungen, Messung des Wärme- und Wasserdampfdurchgangswiderstandes unter stationären Bedingungen [sweating guarded-hotplate test]") bzw. nach gleichlautender internationaler Norm ISO 11 092) - bei 35 °C von höchstens 25 (m². Pascal) / Watt, insbesondere höchstens 20 (m² Pascal) / Watt, vorzugsweise höchstens 13 (m². Pascal) / Watt, bei einer Dicke der Membran 6 von 50 µm aufweisen. Aufgrund der Vielzahl von Schichten 3, 4, 5 und 6 des Schichtaufbaus 2 ist der Wasserdampfdurchgangswiderstand Rₑₜ des Adsorptionsfiltermaterials 1 insgesamt - im Vergleich zu der Membran 6 allein - geringfügig höher; im allgemeinen beträgt der Wasserdampfdurchgangswiderstand Rₑₜ des Adsorptionsfiltermaterials 1 insgesamt höchstens 30 (m²· Pascal) / Watt, insbesondere höchstens 25 (m²· Pascal) / Watt, vorzugsweise höchstens 20 (m²· Pascal) / Watt, bei einer Dicke der Membran 6 von 50 µm

Die Membran 6 sollte im übrigen allenfalls nur geringfügig wasseraufnahmefähig bzw. quellfähig sein; eine geringfügige Wasseraufnahmefähigkeit bzw. Quellfähigkeit erhöht den Tragekomfort. Insbesondere sollte die Quellfähigkeit bzw. das Wasseraufnahmevermögen der Membran 6 höchstens 35 %, insbesondere höchstens 25 %, vorzugsweise höchstens 20 %, bezogen auf das Eigengewicht der Membran 6, betragen. Im übrigen sollte die Membran 6 gegenüber Flüssigkeiten, insbesondere Wasser, und/oder gegenüber Aerosolen zumindest im wesentlichen undurchlässig sein oder zumindest deren Durchtritt verzögern. Zur Erreichung einer allenfalls geringfügigen Quellfähigkeit sollte die Membran 6 keine oder im wesentlichen keine stark hydrophilen Gruppen aufweisen. Zu Zwecken einer geringfügigen Quellung kann die Membran 6 aber schwach hydrophile Gruppen (z. B. Polyethergruppen) oder eine nur geringe Anzahl an starker hydrophilen Gruppen aufweisen.

Durch den Einsatz sogenannter atmungsaktiver Membranen 6, d. h. insbesondere wasserdampfdurchlässiger, aber flüssigkeitsundurchlässiger Membranen 6, insbesondere in Form dünner Filme bzw. Folien, lassen sich überraschende Verbesserungen für ABC-Schutzbekleidung erzielen, insbesondere wenn die Adsorptionsschicht 4 sozusagen hinter der Membran 6, d. h. also im Gebrauchs- bzw. Tragezustand stromabwärts zur Membran 6 angeordnet ist.

Gemäß einer ganz besonderen Ausführungsform der vorliegenden Erfindung kann die Membran 6 selbstklebend, insbesondere hitzeklebrig, ausgebildet sein, so daß die Membran 6 gleichzeitig als Klebstoffschicht zur Befestigung der Adsorptionsschicht 4 dienen kann.

Fig. 2 zeigt ein erfindungsgemäßes Adsorptionsfiltermaterial 1 gemäß einer besonderen Ausgestaltung der vorliegenden Erfindung: Das Adsorptionsfiltermaterial 1 gemäß Fig. 2 umfaßt zwei Trägermaterialien bzw. zwei Trägerschichten 3 und 5, zwischen denen eine flächige Adsorptionsschicht auf Basis eines Aktivkohlefaserflächengebildes 4 angeordnet ist, welches mittels eines punktförmig aufgedruckten bzw. aufgetragenen Klebstoffes 7 an die Trägerschichten 3 und 5 fixiert ist. Bei einer der beiden Trägerschichten 3, 5 kann es sich um ein PA/PES-Vlies handeln, während die jeweils andere Trägerschicht als ein PES/Cellulose-Textilflächengebilde ausgebildet ist. Mindestens eine der Oberflächen 3', 3", 5' und/oder 5" der Trägerschichten 3 bzw. 5 sind durch Plasmabehandlung entsprechend der jeweiligen Anwendung modifiziert (z. B. hydrophobiert oder hydrophiliert, oleophobiert oder oleophiliert, aufgerauht, sauer oder basisch eingestellt etc.). Ein solches Material kann beispielsweise bei der Herstellung von ABC-Schutzkleidung zur Anwendung kommen.

Die einzelnen Schichten 3, 4, 5 und 6 des Schichtaufbaus 2 können jeweils miteinander verbunden sein. Dann bildet der Schichtaufbau 2 einen Verbund bzw. ein Laminat aus. Alternativ können die einzelnen Schichten 3, 4, 5 und 6 des Schichtaufbaus 2 aber auch - zumindest zum Teil - unverbunden übereinandergelegt sein. Dies richtet sich jeweils nach der Art der Anwendung des erfindungsgemäßen Adsorptionsfiltermaterials 1.

Die Herstellung des erfindungsgemäßen Adsorptionsfiltermaterials 1 als Ganzes kann in an sich bekannter Weise erfolgen. Dies ist dem mit der Herstellung von Adsorptionsfiltermaterialien befaßten Fachmann bekannt, so daß in diesem Zusammenhang auf keine weiteren diesbezüglichen Einzelheiten eingegangen zu werden braucht.

Insgesamt resultiert durch die Plasmamodifizierung mindestens einer der Oberflächen 3', 3", 5', 5" mindestens einer der Trägerschichten 3 und/oder 5 ein hochleistungsfähiges Adsorptionsfiltermaterial 1, dessen Oberflächeneigenschaften durch die Plasmabehandlung gezielt eingestellt werden können. Eine hydrophile Modifizierung sorgt beispielsweise für eine verbesserte Wasseraufnahmefähigkeit, während eine Oleophobierung für ein verbessertes Abweisungsvermögen in bezug auf organische chemische Gifte, insbesondere Kampfstoffe oder Schadstoffe, sorgt (z. B. bei Auftreffen eingedickter Tropfen chemischer Gifte auf die Trägerschicht(en) 3 bzw. 5). Durch z. B. eine saure oder basische Oberflächemodifizierung läßt sich gezielt auch eine Neutralisation bestimmter Gifte erreichen.

Die Modifizierung der Oberflächen der Trägerschichten 3 bzw. 5 mittels Plasmabehandlung bietet somit eine umfassende Möglichkeit, um die Oberflächeneigenschaften der Trägerschichten 3 bzw. 5 des erfindungsgemäßen Adsorptionsfiltermaterials 1 über einen weiten Bereich gezielt einzustellen. Beispielsweise können Oberflächenreaktivitäten (beispielsweise Hydrophilie oder Hydrophobie, Oleophobie oder Oleophilie etc.) Oberflächenrauhigkeiten, acide (saure) oder basische Eigenschaften etc. gezielt den jeweiligen Anwendungserfordernissen entsprechend eingestellt bzw. angepaßt werden. Hierdurch wird die Schutzeffizienz des erfindungsgemäßen Adsorptionsfiltermaterials 1 entscheidend verbessert.

Insbesondere ist es möglich, beide Materialseiten eines textilen Verbundes, d. h. des erfindungsgemäßen Adsorptionsfiltermaterials, unterschiedlichen Plasmabehandlungen zu unterziehen und so auf beiden Seiten unterschiedliche Oberflächeneigenschaften zu erreichen. Dabei kann beispielsweise eine Seite hydrophil, die andere Seite hydrophob ausgestattet bzw. modifiziert sein. Die z. B. mit Klebstoff oder anderen Beschichtungen zu versehende textile Fläche des Trägermaterials wird z. B. hydrophobiert. Die Ware kann dann für flächige Beschichtungen oder punktförmige Beschichtungen verwendet werden. Damit wird erreicht, daß Beschichtungen bzw. Klebstoffpunkte die textile Fläche optimal benetzen, so daß eine gute Haftung bei geringem Klebstoffdurchschlag und stabil auf der Ware stehenden Beschichtungspunkten erreicht wird. Die nötigen Mengen für Beschichtungen und Klebstoffauftrag können auf diese Weise wirtschaftlich optimiert werden. Produkte sind textile Beschichtungen mittels Polyurethanen (sogenannte Direktbeschichtungen), die Laminierung mit Folien und atmungsaktiven Membranen sowie adsorptive Filter mit Aktivkohle, bei denen die zu beschichtende Seite mit Plasmabehandlung modifiziert worden ist. Grundsätzlich ist die Plasmabehandlung bei der Herstellung sämtlicher Arten textiler Verbundstoffe von Vorteil. Eingesetzte Kleber sind z. B. feuchtigkeitsvernetzende Polyurethan-Reaktivklebstoffe, High Solids^{®} und Polyurethanbeschichtungen. Wenn das zu beschichtende textile Substrat gleichzeitig in Textilen als Futterseite zum Körper hin getragen wird, ist es aus Sicht des Bekleidungskomforts sinnvoll, die Innenseite hydrophil auszurüsten, um eine gute Ableitung des Schweißes von der Haut zu erreichen. Bevorzugt werden dabei textile Substrate aus Polyamid oder Polyester eingesetzt. Als erfindungsgemäß geeignete Plasmabehandlungsmethoden eignen sich beispielsweise Behandlungen durch Atmosphärenplasma oder Hochvakuumplasma, um nur beispielhaft einige zu nennen.

Wie zuvor beschrieben, eignet sich das erfindungsgemäße Adsorptionsfiltermaterial zur Herstellung von Schutzmaterialien aller Art, insbesondere Schutzanzügen, Schutzhandschuhen, Schutzschuhen und Schutzabdeckungen. Gegenstand der vorliegenden Erfindung sind somit auch die Verwendung des erfindungsgemäßen Adsorptionsfiltermaterials für die vorgenannten Schutzmaterialien sowie die mit dem erfindungsgemäßen Adsorptionsfiltermaterial hergestellten Schutzmaterialien selbst, insbesondere Schutzanzüge, Schutzhandschuhe, Schutzschuhe und Schutzabdeckungen, vorzugsweise für den ABC-Einsatz.

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

## Patentansprüche

1. Adsorptionsfiltermaterial (1) mit Schutz gegenüber chemischen Giften, insbesondere chemischen Kampfstoffen und chemischen Schadstoffen, mit einem mehrschichtigen Schichtaufbau (2),
wobei der Schichtaufbau (2)
• mindestens eine insbesondere flächige Trägerschicht (3) mit zwei gegenüberliegenden Seiten (3', 3") und
• eine der Trägerschicht (3) zugeordnete Adsorptionsschicht (4) auf Basis eines chemische Gifte adsorbierenden Materials, wobei die Adsorptionsschicht (4) ein chemische Gifte adsorbierendes Adsorbens auf Basis von Aktivkohle in Form von Aktivkohleteilchen und/oder Aktivkohlefasern umfaßt, und
• mindestens eine weitere, insbesondere flächige Trägerschicht (5) mit zwei gegenüberliegenden Seiten (5', 5"), wobei die weitere, zweite Trägerschicht (5) auf der der ersten Trägerschicht (3) gegenüberliegenden Seite der Adsorptionsschicht (4) angeordnet ist,
aufweist,
wobei die Oberfläche mindestens einer der beiden Seiten (3', 3") der Trägerschicht (3) durch Plasmabehandlung modifiziert ist.

2. Adsorptionsfiltermaterial nach Anspruch 1, **dadurch gekennzeichnet, daß** die Oberfläche mindestens einer der beiden Seiten (5', 5") der zweiten Trägerschicht (5) durch Plasmabehandlung modifiziert ist.

3. Adsorptionsfiltermaterial nach einem oder mehreren der vorangehenden Ansprüche, **dadurch gekennzeichnet, daß** die Plasmabehandlung mittels Niedertemperaturplasma, insbesondere mittels Kaltgasplasma, insbesondere bei Temperaturen unterhalb von 60 °C, vorzugsweise unterhalb von 50 °C, und/oder unter Vakuum, insbesondere bei Drücken von 0,0001 bis 100 Torr, vorzugsweise 0,001 bis 10 Torr, erfolgt ist und/oder daß als plasmabildende Gase mindestens ein anorganisches oder organisches Gas oder Mischungen von anorganischen und/oder organischen Gasen eingesetzt sind, insbesondere ausgewählt aus der Gruppe von Stickstoffoxiden, Kohlenstoffoxiden, Edelgasen, Stickstoff, Sauerstoff, Ozon und/ oder chlorhaltigen Gasen.

4. Adsorptionsfiltermaterial nach einem oder mehreren der vorangehenden Ansprüche, **dadurch gekennzeichnet, daß** die Plasmabehandlung unmittelbar an der oder den Oberflächen (3', 3", 5', 5") der Trägerschichten (3, 5) durchgeführt ist oder daß die Plasmabehandlung mittelbar an der oder den Oberflächen (3', 3", 5', 5") der Trägerschichten (3, 5) durchgeführt ist, insbesondere nach Aufbringen eines vorzugsweise polymeren oder polymerisierbaren Films auf die zu behandelnde(n) Oberfläche(n), der durch die Plasmabehandlung vernetzt und/oder ausgehärtet wird, insbesondere wobei als polymerer oder polymerisierbarer Film Silikone, insbesondere Silikonöle, oder Organopolysiloxane eingesetzt sind.

5. Adsorptionsfiltermaterial nach einem oder mehreren der vorangehenden Ansprüche, **dadurch gekennzeichnet, daß** durch die Plasmabehandlung die Oberflächeneigenschaften, insbesondere Oberflächenreaktivitäten und/oder Oberflächenbeschaffenheiten, der Oberfläche mindestens einer der beiden Seiten (3', 3") der Trägerschicht (3) und/oder der Oberfläche mindestens einer der beiden Seiten (5', 5") der Trägerschicht (5) modifiziert sind und/oder daß durch die Plasmabehandlung die Oberflächenreaktivität der Oberfläche mindestens einer der beiden Seiten (3', 3") der Trägerschicht (3) und/oder der Oberfläche mindestens einer der beiden Seiten (5', 5") der Trägerschicht (5) modifiziert ist.

6. Adsorptionsfiltermaterial nach einem oder mehreren der vorangehenden Ansprüche, **dadurch gekennzeichnet, daß** durch die Plasmabehandlung die Oberflächenreaktivität der Oberfläche mindestens einer der beiden Seiten (3', 3") der Trägerschicht (3) einerseits und der Oberfläche mindestens einer der beiden Seiten (5', 5") der Trägerschicht (5) andererseits mit jeweils entgegengesetzten Eigenschaften modifiziert sind, insbesondere wobei durch die Plasmabehandlung die Oberflächenreaktivität der Oberfläche mindestens einer der beiden Seiten (3', 3") der Trägerschicht (3) erhöht ist und die Oberflächenreaktivität der Oberfläche mindestens einer der beiden Seiten (5', 5") der Trägerschicht (5) verringert ist oder aber umgekehrt.

7. Adsorptionsfiltermaterial nach einem oder mehreren der vorangehenden Ansprüche, **dadurch gekennzeichnet, daß** durch die Plasmabehandlung die plasmabehandelte Oberfläche der Trägerschicht (3, 5) hydrophil oder hydrophob modifiziert und/oder eingestellt ist und/oder daß durch die Plasmabehandlung die plasmabehandelte Oberfläche der Trägerschicht (3, 5) oleophil oder oleophob modifiziert und/oder eingestellt ist und/ oder daß durch die Plasmabehandlung die plasmabehandelte Oberfläche der Trägerschicht (3, 5) sauer oder basisch modifiziert und/oder eingestellt ist.

8. Adsorptionsfiltermaterial nach einem oder mehreren der vorangehenden Ansprüche, **dadurch gekennzeichnet, daß** mindestens eine der Trägerschichten (3, 5) mindestens eine durch Plasmabehandlung oleophob eingestellte Oberfläche aufweist und/oder daß mindestens eine der Trägerschichten (5, 3) mindestens eine durch Plasmabehandlung hydrophil eingestellte Oberfläche aufweist.

9. Adsorptionsfiltermaterial nach einem oder mehreren der vorangehenden Ansprüche, **dadurch gekennzeichnet, daß** durch die Plasmabehandlung die Oberfläche mindestens einer der beiden Seiten (3', 3") der Trägerschicht (3), vorzugsweise die Oberfläche der von der Adsorptionsschicht (4) abgewandten Außenseite 3' der Trägerschicht (3), oleophob eingestellt ist, während die Oberfläche mindestens einer der beiden Seiten (5', 5") der Trägerschicht (5), vorzugsweise die Oberfläche der von der Adsorptionsschicht (4) abgewandten Außenseite (5') der Trägerschicht (5), hydrophil eingestellt ist, oder aber daß durch die Plasmabehandlung die Oberfläche mindestens einer der beiden Seiten (3', 3") der Trägerschicht (3), vorzugsweise die Oberfläche der von der Adsorptionsschicht (4) abgewandten Außenseite 3' der Trägerschicht (3), hydrophil eingestellt ist, während die Oberfläche mindestens einer der beiden Seiten (5', 5") der Trägerschicht (5), vorzugsweise die Oberfläche der von der Adsorptionsschicht (4) abgewandten Außenseite (5') der Trägerschicht (5), oleophob eingestellt ist.

10. Adsorptionsfiltermaterial nach einem oder mehreren der vorangehenden Ansprüche, **dadurch gekennzeichnet, daß** die im Gebrauchszustand des Adsorptionsfiltermaterials (1) der Schadstoffquelle zugewandte Trägerschicht (3) oder (5), vorzugsweise auf ihrer der Schadstoffquelle zugewandten Seite (3') oder (5'), durch die Plasmabehandlung oleophob eingestellt und/oder modifiziert ist und/oder daß die im Gebrauchszustand des Adsorptionsfiltermaterials (1) der Schadstoffquelle abgewandte Trägerschicht (5) oder (3), vorzugsweise auf ihrer der Schadstoffquelle abgewandten Seite (5') oder (3'), durch die Plasmabehandlung hydrophil eingestellt und/oder modifiziert ist.

11. Adsorptionsfiltermaterial nach einem oder mehreren der vorangehenden Ansprüche, **dadurch gekennzeichnet, daß** die Trägerschicht (3) und/oder die Trägerschicht (5) ein vorzugsweise luftdurchlässiges Textilmaterial ist, insbesondere ausgewählt aus textiles Flächengebilden, wie Geweben, Gewirken, Gestricken, Gelegen, Textilverbundstoffen, Vliesen und Non-Wovens.

12. Adsorptionsfiltermaterial nach einem oder mehreren der vorangehenden Ansprüche, **dadurch gekennzeichnet, daß** die Trägerschicht (3) und/oder die Trägerschicht (5) ein vorzugsweise luftdurchlässiges Textilmaterial ist, welches polymere und/oder synthetische, vorzugsweise thermoplastische Fasern umfaßt oder hieraus besteht, insbesondere wobei das Material der polymeren und/oder synthetischen Fasern ausgewählt ist aus der Gruppe von Polyacryl (PAN), Polyamid (PA), wie Polyamid 6 und Polyamid 66, Polyester (PES), Polyolefin, insbesondere Polyethylen (PE) und Polypropylen (PP), Polyvinylalkohol (PVA1), Polyvinylchlorid (CLF), Polyvinylidenchlorid (CLF), Acetat (CA), Triacetat (CTA), Aramid (AR), Elastan (EL), Elastodien (ED), Fluoro (PTFE), Gummi (LA), Kohlenstoff (CF), Viskose (CV) und deren Mischungen.

13. Adsorptionsfiltermaterial nach einem oder mehreren der vorangehenden Ansprüche, **dadurch gekennzeichnet, daß** mindestens eine der beiden Trägerschichten (3, 5) ein textiles Flächengebilde auf Basis einer Mischung aus natürlichen Fasern einerseits und synthetischen bzw. polymeren Fasern andererseits ist und/oder daß mindestens eine der beiden Trägerschichten (3, 5) ein PA/PES-Textilflächengebilde, insbesondere ein PA/PES-Vlies, ist und/oder daß mindestens eine der beiden Trägerschichten (3, 5) ein PES-Fasern enthaltendes textiles Flächengebilde, insbesondere ein PES/Cellulose-Textilflächengebilde, ist.

14. Adsorptionsfiltermaterial nach einem oder mehreren der vorangehenden Ansprüche, **dadurch gekennzeichnet, daß** die Adsorptionsschicht (4) in die Trägerschicht (3) und/oder in die Trägerschicht (5) integriert ist und/oder daß die Adsorptionsschicht (4) Bestandteil der Trägerschicht (3) und/oder der Trägerschicht (5) ist.

15. Adsorptionsfiltermaterial nach einem oder mehreren der Ansprüche 1 bis 13, **dadurch gekennzeichnet, daß** die Adsorptionsschicht (4) an der Trägerschicht (3) und/oder an der Trägerschicht (5) befestigt, insbesondere dauerhaft befestigt ist, vorzugsweise durch Verkleben, Verheften, Vernähen, Verschweißen oder dergleichen, besonders bevorzugt durch Verkleben vorzugsweise mit einem thermoplastischen Klebstoff, besonders bevorzugt mit einem insbesondere feuchtigkeitsvernetzenden Polyurethan-Reaktivklebstoff, insbesondere wobei der Klebstoff nur diskontinuierlich, vorzugsweise punktförmig, auf die Trägerschicht (3) und/oder die Trägerschicht (5) aufgetragen ist.

16. Adsorptionsfiltermaterial nach einem oder mehreren der vorangehenden Ansprüche, **dadurch gekennzeichnet, daß** die Adsorptionsschicht (4) diskrete Aktivkohleteilchen, vorzugsweise in Kornform ("Kornkohle") oder in Kugelform ("Kugelkohle"), umfaßt.

17. Adsorptionsfiltermaterial nach einem oder mehreren der vorangehenden Ansprüche, **dadurch gekennzeichnet, daß** die Adsorptionsschicht (4) Aktivkohlefasern, insbesondere in Form eines Aktivkohleflächengebildes, umfaßt.

18. Adsorptionsfiltermaterial nach einem oder mehreren der vorangehenden Ansprüche, **dadurch gekennzeichnet, daß** die Adsorptionsschicht (4) außerdem mit mindestens einem Katalysator imprägniert ist, insbesondere wobei als Katalysator Enzyme und/oder Metallionen, vorzugsweise Kupfer-, Silber-, Cadmium-, Platin-, Palladium-, Zink- und/oder Quecksilberionen, venvendet sind und/oder insbesondere wobei die Menge an Katalysator 0,05 bis 12 Gew.-%, vorzugsweise 1 bis 10 Gew.-%, besonders bevorzugt 2 bis 8 Gew.-%, bezogen auf das Gewicht der Adsorptionsschicht (4), beträgt.

19. Adsorptionsfiltermaterial nach einem oder mehreren der vorangehenden Ansprüche, **dadurch gekennzeichnet, daß** das Adsorptionsfiltermaterial (1) außerdem mindestens eine den Durchtritt chemischer Gifte verzögernde oder gegenüber chemischen Giften zumindest im wesentlichen undurchlässige Membran (6) aufweist.

20. Adsorptionsfiltermaterial nach Anspruch 19, **dadurch gekennzeichnet, daß** die Membran (6) zwischen der ersten Trägerschicht (3) und der Adsorptionsschicht (4) oder zwischen der zweiten Trägerschicht (5) und der Adsorptionsschicht (4) angeordnet ist.

21. Adsorptionsfiltermaterial nach Anspruch 19 und/oder 20, **dadurch gekennzeichnet, daß** die Membran (6) zumindest im wesentlichen wasser- und luftundurchlässig, aber wasserdampfdurchlässig ist und/oder daß die Membran (6) eine kontinuierliche, insbesondere geschlossene oder allenfalls mikroporöse Membran ist und/oder daß die Dicke der Membran (6) 1 bis 500 µm, insbesondere 1 bis 250 µm, vorzugsweise 1 bis 100 µm, bevorzugt 1 bis 50 µm, besonders bevorzugt von 2,5 bis 30 µm, ganz besonders bevorzugt von 5 bis 25 µm, beträgt.

22. Adsorptionsfiltermaterial nach einem der mehreren der Ansprüche 19 bis 21. **dadurch gekennzeichnet, daß** die Membran (6) selbstklebend, insbesondere hitzeklebrig, ausgebildet ist und/oder daß die Membran (6) gleichzeitig als Klebstoffschicht zur Befestigung des Adsorptionsschicht (5) dient.

23. Adsorptionsfiltermaterial nach einem der mehreren der Ansprüche 19 bis 22, **dadurch gekennzeichnet, daß** die Membran (6) bei 25 °C und bei einer Dicke von 50 µm eine Wasserdampfdurchlässigkeit von mindestens 12,5 1/m² pro 24 h, insbesondere mindestens 17,5 1/m² pro 24 h, vorzugsweise mindestens 20 1/m² pro 24 h oder mehr, aufweist und/oder daß das Adsorptionsfiltermaterial (1) bei 25 °C und bei einer Dicke der Membran (6) von 50 µm eine Wasserdampfdurchlässigkeit von mindestens 10 1/m² pro 24 h, insbesondere mindestens 15 1/m² pro 24 h, vorzugsweise mindestens 17,5 1/m² pro 24 h, aufweist und/oder daß die Membran (6) einen Wasserdampfdurchgangswiderstand Rₑₜ unter stationären Bedingungen, gemessen nach DIN EN 31 092:1993 (Februar 1994) und internationaler Norm ISO 1 1 092, bei 35 °C von höchstens 25 (m²· Pascal) / Watt, insbesondere höchstens 20 (m²· Pascal) / Watt, vorzugsweise höchstens 13 (m²· Pascal) / Watt, bei einer Dicke von 50 µm aufweist und/oder daß das Adsorptionsfiltermaterial (1) einen Wasserdampfdurchgangswiderstand Rₑₜ unter stationären Bedingungen, gemessen nach DIN EN 31 092:1993 (Februar 1994) und internationaler Norm ISO 11 092, bei 35 °C von höchstens 30 (m²· Pascal) / Watt, insbesondere höchstens 25 (m²· Pascal) / Watt, vorzugsweise höchstens 20 (m²· Pascal) / Watt, bei einer Dicke der Membran (6) von 50 µm aufweist.

24. Adsorptionsfiltermaterial nach einem oder mehreren der Ansprüche 19 bis 23, **dadurch gekennzeichnet, daß** die Membran (6) gegenüber Flüssigkeiten, insbesondere Wasser, und/oder gegenüber Aerosolen zumindest im wesentlichen undurchlässig ist oder zumindest deren Durchtritt verzögert und/oder daß die Membran (6) einen Kunststoff und/oder ein Polymer umfaßt und/oder hieraus besteht, insbesondere wobei der Kunststoff und/oder das Polymer aus der Gruppe von Polyurethanen, Polyetheramiden, Polyesteramiden, Polytetrafluorethylenen und/oder Polymeren auf Cellulosebasis und/oder Derivaten der vorgenannten Verbindungen ausgewählt sein kann, insbesondere wobei die Membran (6) eine polyurethanbasierte Membran oder eine expandierte, gegebenenfalls mikroporöse Membran auf Basis von Polytetrafluorethylen ist.

25. Adsorptionsfiltermaterial nach einem der mehreren der Ansprüche 19 bis 24, **dadurch gekennzeichnet, daß** die Membran (6) als ein mehrschichtiges Membranlaminat und/oder als ein mehrschichtiger Membranverbund ausgebildet ist, insbesondere wobei das Membranlaminat und/oder der Membranverbund aus mindestens zwei, vorzugsweise mindestens drei miteinander verbundenen Schichten oder Lagen besteht und/oder insbesondere wobei das Membranlaminat oder der Membranverbund eine Kernschicht auf Basis eines Polymers auf Cellulosegrundlage und zwei mit der Kernschicht verbundene äußere Schichten, insbesondere auf Basis eines Polyurethans, eines Polyetheramids und/oder eines Polyesteramids, umfaßt, insbesondere wobei die Kernschicht auf Basis eines Polymers auf Cellulosegrundlage als 1 bis 100 µm, insbesondere 5 bis 50 µm, vorzugsweise 10 bis 20 µm dicke Membran ausgebildet sein kann und/oder insbesondere wobei die zwei mit der Kernschicht verbundenen äußeren Schichten jeweils als 1 bis 100 µm, insbesondere 5 bis 50 µm, vorzugsweise 5 bis 10 µm dicke Membran ausgebildet sein können.

26. Adsorptionsfiltermaterial nach einem oder mehreren der Ansprüche 19 bis 25, **dadurch gekennzeichnet, daß** das Adsorptionsfiltermaterial (1) und/oder die Membran (6) eine Barrierewirkung gegenüber chemischen Kampfstoffen, insbesondere Bis[2-chlorethyl]sulfid (Senfgas, Lost, Gelbkreuz), gemessen nach CRDEC-SP-840 10, Methode 2.2, von höchstens 4 µg/cm² pro 24 h, insbesondere höchstens 3,5 µg/cm² pro 24 h, vorzugsweise höchstens 3,0 µg/cm² pro 24 h, besonders bevorzugt höchstens 2,5 µg / cm² pro 24 h, bei einer Dicke der Membran (6) von 50 µm aufweist.

27. Adsorptionsfiltermaterial nach einem oder mehreren der vorangehenden Ansprüche, **dadurch gekennzeichnet, daß** im Gebrauchszustand des Adsorptionsfiltermaterials (1) die Trägerschicht (3) außenseitig angeordnet und/oder einer chemische Gifte freisetzenden Schadstoffquelle zugewandt ist und die Trägerschicht (5) innenseitig angeordnet und/oder einer chemische Gifte freisetzenden Schadstoffquelle abgewandt ist und die Membran (6) zwischen Trägerschicht (3) und Adsorptionsschicht (4) innenseitig, insbesondere stromaufwärts in bezug auf die Adsorptionsschicht (4) angeordnet ist.

28. Adsorptionsfiltermaterial nach einem oder mehreren der vorangehenden Ansprüche, **dadurch gekennzeichnet, daß** die einzelnen Schichten (3, 4, 5, 6) des Schichtaufbaus (2) jeweils miteinander verbunden sind oder aber, zumindest zum Teil, unverbunden übereinander gelegt sind und/ oder daß die einzelnen Schichten (3, 4, 5, 6) des Schichtaufbaus (2) einen Verbund ausbilden.

29. Schutzmaterialien, insbesondere Schutzanzüge, Schutzhandschuhe, Schutzschuhe und Schutzabdeckungen, hergestellt unter Verwendung eines Adsorptionsfiltermaterials (1) nach den Ansprüchen 1 bis 28 und/ oder aufweisend ein Adsorptionsfiltermaterial (1) nach den Ansprüchen 1 bis 28.

30. Schutzmaterialien nach Anspruch 29, **dadurch gekennzeichnet, daß** im Gebrauchszustand des Adsorptionsfiltermaterials (1) die Trägerschicht (3) außenseitig angeordnet, insbesondere einer chemische Gifte freisetzenden Schadstoffquelle zugewandt ist und/oder daß es sich bei den Schutzmaterialien um Schutzanzüge, insbesondere ABC-Schutzanzüge, handelt, wobei im Gebrauchszustand die Trägerschicht (5) innenseitig angeordnet, insbesondere einer chemische Gifte freisetzenden Schadstoffquelle abgewandt ist und auf der dem Körper zugewandten Seite angeordnet ist.

31. Verwendung eines Adsorptionsfiltermaterials (1) nach den Ansprüchen 1 bis 28 zur Herstellung von Schutzmaterialien aller Art, insbesondere Schutzanzügen, Schutzhandschuhen, Schutzschuhen und Schutzabdeckungen, vorzugsweise für den ABC-Einsatz.

32. Verwendung nach Anspruch 31, **dadurch gekennzeichnet, daß** im Gebrauchszustand des Adsorptionsfiltermaterials (1) die Trägerschicht (3) außenseitig angeordnet ist und/oder insbesondere wobei im Gebrauchszustand des Adsorptionsfiltermaterials (1) die Trägerschicht (3) einer chemische Gifte freisetzenden Schadstoffquelle zugewandt ist.

## Claims

1. Adsorptive filtering material (1) which provides protection against chemical poisons, in particular chemical warfare agents and chemical noxiants, and has a plural layered construction (2),
the layered construction (2) comprising
• at least one, in particular sheetlike, supporting layer (3) having two opposite sides (3', 3 ") and
• an adsorbing layer (4) assigned to the supporting layer (3) and based on a material capable of adsorbing chemical poisons, the adsorbing layer (4) comprising an adsorbent capable of adsorbing chemical poisons and based on activated carbon in the form of activated carbon particles and/or activated carbon fibers,
• at least one further, in particular sheetlike, supporting layer (5) having two opposite sides (5', 5"), the further, second supporting layer (5) being disposed on that side of the adsorbing layer (4) which is opposite the first supporting layer (3),
the surface of at least one of the two sides (3', 3") of the supporting layer (3) being modified by plasma treatment.

2. Adsorptive filtering material according to Claim 1 which is **characterized in that** the surface of at least one of the two sides (5', 5") of the second supporting layer (5) is modified by plasma treatment.

3. Adsorptive filtering material according to one or more of the preceding claims which is **characterized in that** the plasma treatment is effected by means of low temperature plasma and in particular by means of cold gas plasma, in particular at temperatures below 60 °C, preferably below 50 °C and/or under vacuum, in particular at pressures of 0.0001 to 100 Torr and preferably 0.001 to 10 Torr, and/or **in that** as plasma-forming gases there are used at least one inorganic or organic gas or mixtures of inorganic and/or organic gases, in particular selected from the group of nitrogen oxides, carbon oxides, noble gases, nitrogen, oxygen, ozone and/or chlorous gases.

4. Adsorptive filtering material according to one or more of the preceding claims which is **characterized in that** the plasma treatment is carried out directly at the surface or surfaces (3', 3", 5', 5") of the supporting layers (3, 5), or **in that** the plasma treatment is carried out indirectly at the surface or surfaces (3', 3", 5', 5") of the supporting layers (3, 5), in particular after application of a preferably polymeric or polymerizable film to the surface or surfaces to be treated, which film is crosslinked and/or cured by the plasma treatment, in particular wherein the polymeric or polymerizable film used comprises silicones, in particular silicone oils, or organopolysiloxanes.

5. Adsorptive filtering material according to one or more of the preceding claims which is **characterized in that** the plasma treatment has modified the surface properties, in particular the surface reactivities and/or surface constitution, of the surface of at least one of the two sides (3', 3") of the supporting layer (3) and/or of the surface of at least one of the two sides (5', 5") of the supporting layer (5), and/or **in that** the plasma treatment has modified the surface reactivity of the surface of at least one of the two sides (3', 3 ") of the supporting layer (3) and/or of the surface of at least one of the two sides (5', 5") of the supporting layer (5).

6. Adsorptive filtering material according to one or more of the preceding claims which is **characterized in that** the plasma treatment has modified the surface reactivity of the surface of at least one of the two sides (3', 3") of the supporting layer (3) on the one hand and of the surface of at least one of the two sides (5', 5") of the supporting layer (5) on the other to have respectively contrary properties, in particular wherein the plasma treatment has enhanced the surface reactivity of the surface of at least one of the two sides (3', 3") of the supporting layer (3) and/or reduced the surface reactivity of the surface of at least one of the two sides (5', 5") of the supporting layer (5), or else vice versa.

7. Adsorptive filtering material according to one or more of the preceding claims which is **characterized in that** the plasma treatment has made the plasma-treated surface of the supporting layer (3, 5) hydrophilic or hydrophobic, and/or **in that** the plasma treatment has made the plasma-treated surface of the supporting layer (3, 5) oleophilic or oleophobic, and/or the plasma treatment has made the plasma-treated surface of the supporting layer (3, 5) acidic or alkaline.

8. Adsorptive filtering material according to one or more of the preceding claims which is **characterized in that** at least one of the supporting layers (3, 5) has at least one surface made oleophobic by plasma treatment and/or in that at least one of the supporting layers (5, 3) has at least one surface made hydrophilic by plasma treatment.

9. Adsorptive filtering material according to one or more of the preceding claims which is **characterized in that** the plasma treatment has made the surface of at least one of the two sides (3', 3") of the supporting layer (3), preferably the surface of the outer side (3') of supporting layer (3) which faces away from the adsorbing layer (4), oleophobic, while the surface of at least one of the two sides (5', 5") of the supporting layer (5), preferably the surface of the outer side (5') of the supporting layer (5) which faces away from the adsorbing layer (4), has been made hydrophilic, or alternatively **in that** the plasma treatment has made the surface of at least one of the two sides (3', 3") of the supporting layer (3), preferably the surface of the outer side (3') of supporting layer (3) which faces away from the adsorbing layer (4), hydrophilic, while the surface of at least one of the two sides (5', 5") of the supporting layer (5), preferably the surface of the outer side (5') of the supporting layer (5) which faces away from the adsorbing layer (4), has been made oleophobic.

10. Adsorptive filtering material according to one or more of the preceding claims which is **characterized in that** the supporting layer (3) or (5) which faces the noxiant source in the use state of the adsorptive filtering material (1) has been made oleophobic by the plasma treatment, preferably on its side (3') or (5') which faces the noxiant source, and/or **in that** the supporting layer (5) or (3) which faces away from the noxiant source in the use state of the adsorptive filtering material (1) has been made hydrophilic by the plasma treatment, preferably on its side (5') or (3') which faces away from the noxiant source.

11. Adsorptive filtering material according to one or more of the preceding claims which is **characterized in that** the supporting layer (3) and/or the supporting layer (5) is a preferably air-pervious textile material, in particular selected from textile sheetlike structures, such as wovens, formed-loop knits, drawn-loop knits, nonwoven scrims, textile composites, batts and nonwovens.

12. Adsorptive filtering material according to one or more of the preceding claims which is **characterized in that** the supporting layer (3) and/or the supporting layer (5) is a preferably air-pervious textile material which comprises or consists of polymeric and/or synthetic, preferably thermoplastic, fibers, in particular wherein the material of the polymeric and/or synthetic fibers is selected from the group of polyacrylic (PAN), polyamide (PA), such as nylon 6 and nylon 66, polyester (PES), polyolefin, in particular polyethylene (PE) and polypropylene (PP), polyvinyl alcohol (PVA1), polyvinyl chloride (CLF), polyvinylidene chloride (CLF), acetate (CA), triacetate (CTA), aramid (AR), elastane (EL), elastodiene (ED), fluoro (PTFE), rubber (LA), carbon (CF), viscose (CV) and mixtures thereof.

13. Adsorptive filtering material according to one or more of the preceding claims which is **characterized in that** at least one of the two supporting layers (3, 5) is a textile sheetlike structure based on a mixture of natural fibers on the one hand and synthetic/polymeric fibers on the other, and/or **in that** at least one of the two supporting layers (3, 5) is a PA-PES textile sheetlike structure, in particular a PA-PES batt, and/or **in that** at least one of the two supporting layers (3, 5) is a textile sheetlike structure including PES fibers and in particular a PES-cellulose textile sheetlike structure.

14. Adsorptive filtering material according to one or more of the preceding claims which is **characterized in that** the adsorbing layer (4) is integrated in the supporting layer (3) and/or in the supporting layer (5), and/or **in that** the adsorbing layer (4) is part of the supporting layer (3) and/or the supporting layer (5).

15. Adsorptive filtering material according to one or more of Claims 1 to 13 which is **characterized in that** the adsorbing layer (4) is secured to the supporting layer (3) and/or to the supporting layer (5), in particular durably secured, preferably by adhering, stapling, sewing, welding or the like, more preferably by adhering preferably with a thermoplastic adhesive, more preferably with an, in particular moisture-crosslinking polyurethane reactive adhesive, in particular wherein the adhesive has been applied merely discontinuously and preferably dotwise to the supporting layer (3) and/or to the supporting layer (5).

16. Adsorptive filtering material according to one or more of the preceding claims which is **characterized in that** the adsorbing layer (4) comprises discrete activated carbon particles, preferably in granule form ("granulocarbon") or in spherical form ("spherulocarbon").

17. Adsorptive filtering material according to one or more of the preceding claims which is **characterized in that** the adsorbing layer (4) comprises activated carbon fibers, in particular in the form of an activated carbon sheetlike structure.

18. Adsorptive filtering material according to one or more of the preceding claims which is **characterized in that** the adsorbing layer (4) is additionally impregnated with at least one catalyst, in particular wherein the catalyst used is enzymes and/or metal ions, preferably ions of copper, of silver, of cadmium, of platinum, of palladium, of zinc and/or of mercury, and/or in particular wherein the amount of catalyst is in the range from 0.05% to 12% by weight, preferably in the range from 1% to 10% by weight and more preferably in the range from 2% to 8% by weight, based on the weight of the adsorbing layer (4).

19. Adsorptive filtering material according to one or more of the preceding claims which is **characterized in that** the adsorptive filtering material (1) further comprises at least one membrane (6) which retards the passage of chemical poisons or is at least essentially impervious to chemical poisons.

20. Adsorptive filtering material according to Claim 19 which is **characterized in that** the membrane (6) is disposed between the first supporting layer (3) and the adsorbing layer (4) or between the second supporting layer (5) and the adsorbing layer (4).

21. Adsorptive filtering material according to Claim 19 and/or 20 which is **characterized in that** the membrane (6) is at least essentially water and air impervious but water vapor pervious, and/or **in that** the membrane (6) is a continuous, in particular uninterrupted or at most microporous membrane, and or **in that** the thickness of membrane (6) is in the range from 1 to 500 µm, in particular in the range from 1 to 250 µm, preferably in the range from 1 to 100 µm, more preferably in the range from 1 to 50 µm, even more preferably in the range from 2.5 to 30 µm and most preferably in the range from 5 to 25 µm.

22. Adsorptive filtering material according to one or more of Claims 19 to 21 which is **characterized in that** the membrane (6) is self-adhesive and in particular thermotacky, and/or **in that** the membrane (6) simultaneously serves as an adhesive layer for securing the adsorbing layer (5).

23. Adsorptive filtering material according to one or more of Claims 19 to 22 which is **characterized in that** the membrane (6) has at 25 °C and at a thickness of 50 µm a water vapor transmission rate of at least 12.5 1/m² per 24 h, in particular at least 17.5 1/m² per 24 h, preferably at least 20 1/m² per 24 h or more, and/or **in that** the adsorptive filtering material (1) has at 25 °C and at a thickness of membrane (6) of 50 µm a water vapor transmission rate of at least 10 1/m² per 24 h, in particular at least 15 1/m² per 24 h, preferably at least 17.5 1/m² per 24 h, and/or **in that** the membrane (6) has a water vapor transmission resistance Rₑₜ under steady state conditions, measured according to DIN EN 31 092: 1993 (February 1994) and the international standard ISO 11 092, at 35 °C of at most 25 (m²· pascal)/watt, in particular at most 20 (m²· pascal)/watt, preferably at most 13 (m² · pascal)/watt, when 50 µm thick, and/or **in that** the adsorptive filtering material (1) has a water vapor transmission resistance Rₑₜ under steady state conditions, measured according to DIN EN 31 092: 1993 (February 1994) and the international standard ISO 11 092, at 35 °C of at most 30 (m² pascal)/watt, in particular at most 25 (m² pascal)/watt, preferably at most 20 (m² pascal)/watt, when membrane (6) is 50 µm thick.

24. Adsorptive filtering material according to one or more of Claims 19 to 23 which is **characterized in that** the membrane (6) is at least essentially impervious to liquids, in particular water, and/or to aerosols, or at least retards their passage, and/or **in that** the membrane (6) comprises a plastic and/or a polymer and/or consists thereof, in particular wherein the plastic and/or the polymer can be selected from the group of polyurethanes, polyetheramides, polyesteramides, polytetrafluoroethylenes and/or polymers based on cellulose and/or derivatives of the aforementioned compounds, in particular wherein the membrane (6) is a polyurethane-based membrane or an expanded, perhaps microporous membrane based on polytetrafluoroethylene.

25. Adsorptive filtering material according to one or more of Claims 19 to 24 which is **characterized in that** the membrane (6) is constructed as a multilayered membrane laminate and/or as a multilayered membrane composite, in particular wherein the membrane laminate and/or the membrane composite consists of at least two and preferably at least three mutually interbonded layers or plies, and/or in particular wherein the membrane laminate or the membrane composite comprises a core layer based on a cellulose-based polymer and two outer layers bonded to the core layer, in particular on the basis of a polyurethane, of a polyetheramide and/or of a polyesteramide, in particular wherein the core layer based on a cellulose-based polymer can be constructed as a membrane from 1 to 100 µm, in particular from 5 to 50 µm and preferably from 10 to 20 µm in thickness, and/or in particular wherein the two outer layers bonded to the core layer will each be constructed as a membrane from 1 to 100 µm, in particular from 5 to 50 µm and preferably from 5 to 10 µm in thickness.

26. Adsorptive filtering material according to one or more of Claims 19 to 25 which is **characterized in that** the adsorptive filtering material (1) and/or the membrane (6) has a barrier effect with regard to chemical warfare agents, in particular bis(2-chloroethyl sulfide) (mustard gas, Hd, yellow cross), measured according to CRDEC-SP-84010, method 2.2, permitting permeation of at most 4 µg/cm² per 24 h, in particular at most 3.5 µg/cm² per 24 h, preferably at most 3.0 µg/cm² per 24 h and more preferably at most 2.5 µg/cm² per 24 h when membrane (6) is 50 µm thick.

27. Adsorptive filtering material according to one or more of the preceding claims which is **characterized in that**, in the use state of the adsorptive filtering material (1), the supporting layer (3) is disposed on the outside and/or facing a noxiant source releasing chemical poisons and the supporting layer (5) is disposed on the inside and/or facing away from a noxiant source releasing chemical poisons and the membrane (6) is disposed on the inside between the supporting layer (3) and the adsorbing layer (4), in particular upstream with regard to the adsorbing layer (4).

28. Adsorptive filtering material according to one or more of the preceding claims which is **characterized in that** the individual layers (3, 4, 5, 6) of the layered construction (2) are each interbonded or alternatively, at least in part, mutually superposed unbonded, and/or **in that** the individual layers (3, 4, 5, 6) of the layered construction (2) form a composite.

29. Protective materials, in particular protective suits, protective gloves, protective shoes and protective covers, produced using an adsorptive filtering material (1) according to Claims 1 to 28 and/or comprising an adsorptive filtering material (1) according to Claims 1 to 28.

30. Protective materials according to Claim 29 which are **characterized in that**, in the use state of the adsorptive filtering material (1), the supporting layer (3) is disposed on the outside, in particular facing a noxiant source releasing chemical poisons, and/or **in that** the protective materials are protective suits, in particular NBC protective suits, wherein, in the use state, the supporting layer (5) is disposed on the inside, in particular facing away from a noxiant source releasing chemical poisons and disposed on the body-facing side.

31. Use of an adsorptive filtering material (1) according to Claims 1 to 28 for producing protective materials of any kind, in particular protective suits, protective gloves, protective shoes and protective covers, preferably for NBC deployment.

32. Use according to Claim 31, **characterized in that**, in the use state of the adsorptive filtering material (1), the supporting layer (3) is disposed on the outside and/or in particular, in the use state of the adsorptive filtering material (1), the supporting layer (3) faces a noxiant source releasing chemical poisons.

## Revendications

1. Matériau filtrant par adsorption (1) à protection contre des poisons chimiques, en particulier des agents chimiques de combat et des substances chimiques nocives, ayant une structure stratifiée multicouche (2),
la structure stratifiée (2) comportant
• au moins une couche de support (3) en particulier plane, présentant deux faces opposées (3', 3") et
• une couche d'adsorption (4) affectée à la couche de support (3), à base d'un matériau adsorbant des poisons chimiques, la couche d'adsorption (4) comprenant un adsorbant qui adsorbe des poisons chimiques, à base de charbon actif sous forme de particules de charbon actif et/ou de fibres de charbon actif, et
• au moins une autre couche de support (5) en particulier plane, présentant deux faces opposées (5', 5"), l'autre, deuxième couche de support (5) étant disposée sur la face opposée à la première couche de support (3) de la couche d'adsorption (4),
la surface d'au moins l'une des deux faces (3', 3") de la couche de support (3) étant modifiée par traitement par plasma.

2. Matériau filtrant par adsorption selon la revendication 1, **caractérisé en ce que** la surface d'au moins l'une des deux faces (5', 5") de la deuxième couche de support (5) est modifiée par traitement par plasma.

3. Matériau filtrant par adsorption selon une ou plusieurs des revendications précédentes, **caractérisé en ce que** le traitement par plasma est effectué au moyen de plasma à basse température, en particulier au moyen de plasma à gaz froid, en particulier à des températures inférieures à 60 °C, de préférence inférieures à 50 °C, et/ou sous vide, en particulier sous des pressions de 0,0001 à 100 torrs, de préférence 0,001 à 10 torrs, et/ou **en ce que** sont utilisés comme gaz générateurs de plasma au moins un gaz organique ou inorganique ou des mélanges de gaz organiques et/ou inorganiques, en particulier choisis dans le groupe constitué par les oxydes d'azote, les oxydes de carbone, les gaz rares, l'azote, l'oxygène, l'ozone et/ou des gaz chlorés.

4. Matériau filtrant par adsorption selon une ou plusieurs des revendications précédentes, **caractérisé en ce que** le traitement par plasma est effectué directement sur la ou les surfaces (3', 3", 5', 5") des couches de support (3, 5) ou **en ce que** le traitement par plasma est effectué indirectement sur la ou les surfaces (3', 3", 5', 5") des couches de support (3, 5), en particulier après application d'un film de préférence polymère ou polymérisable sur la/les surface(s) à traiter, qui est réticulé et/ou durci par le traitement par plasma, en particulier des silicones, notamment des huiles de silicone, ou des organopolysiloxanes étant utilisés en tant que film polymère ou polymérisable.

5. Matériau filtrant par adsorption selon une ou plusieurs des revendications précédentes, **caractérisé en ce que** sous l'effet du traitement par plasma les propriétés superficielles, en particulier les réactivités superficielles et/ou les caractéristiques superficielles, de la surface d'au moins l'une des deux faces (3', 3") de la couche de support (3) et/ou de la surface d'au moins l'une des deux faces (5', 5") de la couche de support (5) sont modifiées et/ou **en ce que** sous l'effet du traitement par plasma la réactivité superficielle de la surface d'au moins l'une des deux faces (3', 3") de la couche de support (3) et/ou de la surface d'au moins l'une des deux faces (5', 5") de la couche de support (5) est modifiée.

6. Matériau filtrant par adsorption selon une ou plusieurs des revendications précédentes, **caractérisé en ce que** sous l'effet du traitement par plasma la réactivité superficielle de la surface d'au moins l'une des deux faces (3', 3") de la couche de support (3) d'une part et de la surface d'au moins l'une des deux faces (5', 5") de la couche de support (5) d'autre part sont modifiées avec chacune des propriétés opposées, en particulier sous l'effet du traitement par plasma la réactivité superficielle de la surface d'au moins l'une des deux faces (3', 3") de la couche de support (3) étant augmentée et la réactivité superficielle de la surface d'au moins l'une des deux faces (5', 5") de la couche de support (5) étant diminuée ou inversement.

7. Matériau filtrant par adsorption selon une ou plusieurs des revendications précédentes, **caractérisé en ce que** sous l'effet du traitement par plasma la surface traitée par plasma de la couche de support (3, 5) est modifiée et/ou ajustée pour être hydrophile ou hydrophobe et/ou **en ce que** sous l'effet du traitement par plasma la surface traitée par plasma de la couche de support (3, 5) est modifiée et/ou ajustée pour être oléophile ou oléophobe et/ou **en ce que** sous l'effet du traitement par plasma la surface traitée par plasma de la couche de support (3, 5) est modifiée et/ou ajustée pour être acide ou basique.

8. Matériau filtrant par adsorption selon une ou plusieurs des revendications précédentes, **caractérisé en ce qu'**au moins l'une des couches de support (3, 5) présente au moins une surface rendue hydrophobe par traitement par plasma et/ou **en ce qu'**au moins l'une des couches de support (5, 3) présente au moins une surface rendue hydrophile par traitement par plasma.

9. Matériau filtrant par adsorption selon une ou plusieurs des revendications précédentes, **caractérisé en ce que** sous l'effet du traitement par plasma la surface d'au moins l'une des deux faces (3', 3") de la couche de support (3), de préférence la surface de la face externe (3') opposée à la couche d'adsorption (4) de la couche de support (3), est ajustée pour être oléophobe, tandis que la surface d'au moins l'une des deux faces (5', 5") de la couche de support (5), de préférence la surface de la face externe (5') opposée à la couche d'adsorption (4) de la couche de support (5), est ajustée pour être hydrophile, ou **en ce que** sous l'effet du traitement par plasma la surface d'au moins l'une des deux faces (3', 3") de la couche de support (3), de préférence la surface de la face externe (3') opposée à la couche d'adsorption (4) de la couche de support (3), est ajustée pour être hydrophile, tandis que la surface d'au moins l'une des deux faces (5', 5") de la couche de support (5), de préférence la surface de la face externe (5') opposée à la couche d'adsorption (4) de la couche de support (5), est ajustée pour être oléophobe.

10. Matériau filtrant par adsorption selon une ou plusieurs des revendications précédentes, **caractérisé en ce que** la couche de support (3) ou (5) tournée, en l'état d'emploi du matériau filtrant par adsorption (1), vers la source de substances nocives, est modifiée et/ou ajustée pour être oléophobe, par le traitement par plasma, de préférence sur sa face (3') ou (5') tournée vers la source de substances nocives et/ou **en ce que** la couche de support (5) ou (3) opposée, en l'état d'emploi du matériau filtrant par adsorption (1), à la source de substances nocives, est modifiée et/ou ajustée pour être hydrophile, par le traitement par plasma, de préférence sur sa face (5') ou (3') opposée à la source de substances nocives.

11. Matériau filtrant par adsorption selon une ou plusieurs des revendications précédentes, **caractérisé en ce que** la couche de support (3) et/ou la couche de support (5) est/sont un matériau textile de préférence perméable à l'air en particulier choisi parmi des articles plats textiles, tels que des tissus, tissus à mailles, tricots, nappes, composites textiles, voiles et non-tissés.

12. Matériau filtrant par adsorption selon une ou plusieurs des revendications précédentes, **caractérisé en ce que** la couche de support (3) et/ou la couche de support (5) est/sont un matériau textile de préférence perméable à l'air, qui comprend ou consiste en des fibres polymères et/ou synthétiques, de préférence thermoplastiques, le matériau des fibres polymères et/ou synthétiques étant choisi dans le groupe constitué par un polyacrylonitrile (PAN), polyamide (PA), tel que le polyamide 6 et le polyamide 66, un polyester (PES), une polyoléfine, en particulier le polyéthylène (PE) et le polypropylène (PP), le poly(alcool vinylique) (PVA1), le poly(chlorure de vinyle) (CLF), le poly(chlorure de vinylidène) (CLF), acétate (CA), triacétate (CTA), aramide (AR), élastane (EL), élastodiène (ED), fluoro (PTFE), caoutchouc (LA), carbone (CF), viscose (CV) et des mélanges de ceux-ci.

13. Matériau filtrant par adsorption selon une ou plusieurs des revendications précédentes, **caractérisé en ce qu'**au moins l'une des deux couches de support (3, 5) consiste en un article plat textile à base d'un mélange de fibres naturelles d'une part et de fibres polymères ou synthétiques d'autre part et/ou **en ce qu'**au moins l'une des deux couches de support (3, 5) est un article plat textile PA/PES, en particulier un non-tissé en PA/PES et/ou **en ce qu'**au moins l'une des deux couches de support (3, 5) est un article plat textile contenant des fibres de PES, en particulier un article plat textile à base de PES/cellulose.

14. Matériau filtrant par adsorption selon une ou plusieurs des revendications précédentes, **caractérisé en ce que** la couche d'adsorption (4) est intégrée dans la couche de support (3) et/ou dans la couche de support (5) et/ou **en ce que** la couche d'adsorption (4) fait partie de la couche de support (3) et/ou de la couche de support (5).

15. Matériau filtrant par adsorption selon une ou plusieurs des revendications 1 à 13, **caractérisé en ce que** la couche d'adsorption (4) est fixée, en particulier fixée durablement, sur la couche de support (3) et/ou sur la couche de support (5), de préférence par collage, agrafage, couture, soudage ou similaires, de façon particulièrement préférée par collage, de préférence avec un adhésif thermoplastique, de façon particulièrement préférée avec un adhésif réactif polyuréthane en particulier réticulable à l'humidité, l'adhésif étant appliqué seulement de façon discontinue, de préférence par points, sur la couche de support (3) et/ou la couche de support (5).

16. Matériau filtrant par adsorption selon une ou plusieurs des revendications précédentes, **caractérisé en ce que** la couche d'adsorption (4) comprend des particules de charbon actif distinctes, de préférence sous forme de grains (« charbon granulaire ») ou sous forme de globules (« charbon globulaire »).

17. Matériau filtrant par adsorption selon une ou plusieurs des revendications précédentes, **caractérisé en ce que** la couche d'adsorption (4) comprend des fibres de charbon actif, en particulier sous forme d'un article plat en charbon actif.

18. Matériau filtrant par adsorption selon une ou plusieurs des revendications précédentes, **caractérisé en ce que** la couche d'adsorption (4) est en outre imprégnée d'au moins un catalyseur, en particulier des enzymes et/ou des ions métalliques, de préférence des ions cuivre, argent, cadmium, platine, palladium, zinc et/ou mercure étant utilisés comme catalyseur et/ou en particulier la quantité de catalyseur valant de 0,05 à 12 % en poids, de préférence de 1 à 10 % en poids, de façon particulièrement préférée de 2 à 8 %, par rapport au poids de la couche d'adsorption (4).

19. Matériau filtrant par adsorption selon une ou plusieurs des revendications précédentes, **caractérisé en ce que** le matériau filtrant par adsorption (1) en outre comporte au moins une membrane (6) ralentissant la pénétration de poisons chimiques ou au moins essentiellement imperméable aux poisons chimiques.

20. Matériau filtrant par adsorption selon la revendication 19, **caractérisé en ce que** la membrane (6) est disposée entre la première couche de support (3) et la couche d'adsorption (4) ou entre la deuxième couche de support (5) et la couche d'adsorption (4).

21. Matériau filtrant par adsorption selon la revendication 19 et/ou la revendication 20, **caractérisé en ce que** la membrane (6) est au moins essentiellement imperméable à l'eau et à l'air, mais perméable à la vapeur d'eau et/ou en ce que la membrane (6) est une membrane continue, en particulier fermée ou tout au plus microporeuse et/ou **en ce que** l'épaisseur de la membrane (6) vaut de 1 à 500 µm, en particulier de 1 à 250 µm, de préférence de 1 à 100 µm, de préférence de 1 à 50 µm, de façon particulièrement préférée de 2,5 à 30 µm, de façon tout particulièrement préférée de 5 à 25 µm.

22. Matériau filtrant par adsorption selon une ou plusieurs des revendications 19 à 21, **caractérisé en ce que** la membrane (6) est d'une constitution autoadhésive, en particulier thermocollante et/ou **en ce que** la membrane (6) sert en même temps de couche d'adhésif pour la fixation de la couche d'adsorption (5).

23. Matériau filtrant par adsorption selon une ou plusieurs des revendications 19 à 22, **caractérisé en ce que** la membrane (6) présente à 25 °C et en une épaisseur de 50 µm une perméabilité à la vapeur d'eau d'au moins 12,5 1/m² par 24 h, en particulier d'au moins 17,5 1/m² par 24 h, de préférence d'au moins 20 1/m² par 24 h ou plus, et/ou **en ce que** le matériau filtrant par adsorption (1) présente à 25 °C et pour une épaisseur de la membrane (6) de 50 µm une perméabilité à la vapeur d'eau d'au moins 10 1/m² par 24 h, en particulier d'au moins 15 1/m² par 24 h, de préférence d'au moins 17,5 1/m² par 24 h et/ou **en ce que** la membrane (6) présente une résistance au passage de la vapeur d'eau Rₑₜ dans des conditions stationnaires, mesurée selon DIN EN 31 092:1993 (février 1994) et la norme internationale ISO 11 092, à 35 °C, d'au maximum 25 (m²·Pa)/W, en particulier d'au maximum 20 (m²·Pa)/W, de préférence d'au maximum 13 (m²·Pa)/W, en une épaisseur de 50 µm et/ou **en ce que** le matériau filtrant par adsorption (1) présente une résistance au passage de la vapeur d'eau Rₑₜ dans des conditions stationnaires, mesurée selon DIN EN 31 092:1993 (février 1994) et la norme internationale ISO 11 092, à 35 °C, d'au maximum 30 (m²·Pa)/W, en particulier d'au maximum 25 (m²·Pa)/W, de préférence d'au maximum 20 (m²·Pa)/W, pour une épaisseur de la membrane (6) de 50 µm.

24. Matériau filtrant par adsorption selon une ou plusieurs des revendications 19 à 23, **caractérisé en ce que** la membrane (6) est au moins essentiellement imperméable aux liquides, à l'eau en particulier, et/ou aux aérosols ou au moins ralentit leur pénétration et/ou **en ce que** la membrane (6) comprend et/ou consiste en une matière plastique et/ou un polymère, en particulier la matière plastique et/ou le polymère pouvant être choisi(s) dans le groupe des polyuréthanes, polyétheramides, polyesteramides, polytétrafluoroéthylènes et/ou polymères à base de cellulose et/ou des dérivés des composés précités, en particulier la membrane (6) étant une membrane à base de polyuréthane ou une membrane expansée, éventuellement microporeuse, à base de polytétrafluoroéthylène.

25. Matériau filtrant par adsorption selon une ou plusieurs des revendications 19 à 24, **caractérisé en ce que** la membrane (6) est constituée d'un stratifié de membrane multicouche et/ou d'un composite de membrane multicouche, en particulier le stratifié de membrane et/ou le composite de membrane consistant en au moins deux, de préférence au moins trois couches ou strates liées entre elles et/ou le stratifié de membrane et/ou le composite de membrane comprenant une couche d'âme à base d'un polymère à base de cellulose et deux couches externes, en particulier à base d'un polyuréthane, d'un polyétheramide et/ou d'un polyesteramide, liées à la couche d'âme, en particulier la couche d'âme à base d'un polymère à base de cellulose pouvant être constituée sous forme de membrane de 1 à 100 µm, en particulier de 5 à 50 µm, de préférence de 10 à 20 µm d'épaisseur et/ou en particulier les deux couches externes liées à la couche d'âme pouvant être constituées sous forme de membrane de 1 à 100 µm, en particulier de 5 à 50 µm, de préférence de 10 à 10 µm d'épaisseur.

26. Matériau filtrant par adsorption selon une ou plusieurs des revendications 19 à 25, **caractérisé en ce que** le matériau filtrant par adsorption (1) et/ou la membrane (6) présente(nt) un effet de barrière à des agents chimiques de combat, en particulier le sulfure de bis[2-chloréthyle] (gaz moutarde, ypérite, Gelbkreuz), mesuré selon CRDEC-SP-84010, méthode 2.2, d'au maximum 4 µg/cm² par 24 h, en particulier d'au maximum 3,5 µg/cm² par 24 h, de préférence d'au maximum 3,0 µg/cm² par 24 h, de façon particulièrement préférée d'au maximum 2,5 µg/cm² par 24 h, pour une épaisseur de la membrane (6) de 50 µm.

27. Matériau filtrant par adsorption selon une ou plusieurs des revendications précédentes, **caractérisé en ce qu'**en l'état d'emploi du matériau filtrant par adsorption (1) la couche de support (3) est disposée vers l'extérieur et/ou est tournée vers une source de substances nocives libérant des poisons chimiques et la couche de support (5) est disposée vers l'intérieur et/ou est opposée à une source de substances nocives opposée libérant des poisons chimiques et la membrane (6) est disposée entre couche de support (3) et couche d'adsorption (4) vers l'intérieur, en particulier en amont par rapport à la couche d'adsorption (4).

28. Matériau filtrant par adsorption selon une ou plusieurs des revendications précédentes, **caractérisé en ce que** les couches individuelles (3, 4, 5, 6) de la structure stratifiée (2) sont chaque fois liées entre elles ou bien, au moins en partie, sont superposées sans être liées et/ou **en ce que** les couches individuelles (3, 4, 5, 6) de la structure stratifiée (2) constituent un composite.

29. Matériaux de protection, en particulier vêtements de protection, gants de protection, chaussures de protection et couvertures de protection, produits avec utilisation d'un matériau filtrant par adsorption (1) selon les revendications 1 à 28 et/ou comportant un matériau filtrant par adsorption (1) selon les revendications 1 à 28.

30. Matériau filtrant par adsorption selon la revendication 29, **caractérisé en ce qu'**en l'état d'emploi du matériau filtrant par adsorption (1) la couche de support (3) est disposée vers l'extérieur, en particulier est tournée vers une source de substances nocives libérant des poisons chimiques et/ou **en ce que** les matériaux de protection consistent en des vêtements de protection, en particulier des vêtements de protection NBC, en l'état d'emploi la couche de support (5) étant disposée vers l'intérieur, en particulier étant opposée à une source de substances nocives libérant des poisons chimiques et étant disposée du côté tourné vers le corps.

31. Utilisation d'un matériau filtrant par adsorption (1) selon les revendications 1 à 28, pour la fabrication de matériaux de protection de tout type, en particulier de vêtements de protection, gants de protection, chaussures de protection et couvertures de protection, de préférence pour l'emploi NBC.

32. Utilisation selon la revendication 31, **caractérisée en ce qu'**en l'état d'emploi du matériau filtrant par adsorption (1) la couche de support (3) est disposée vers l'extérieur et/ou en particulier en l'état d'emploi du matériau filtrant par adsorption (1) la couche de support (3) étant tournée vers une source de substances nocives libérant des poisons chimiques.
